# DEMANDE DE BREVET EUROPEEN

(11) **EP 0 678 240 A1**
(43) Date de publication de la demande: **25.10.1995**
(21) Numéro de dépôt: 95400824.9
(22) Date de dépôt: 11.04.1995
(51) Int. Cl.: A01M 15/00, A01M 21/04

(54) **Désherbeur thermique agricole**

(30) Priorité: 20.04.1994 FR 9404742; 30.06.1994 FR 9408107
(71) Demandeur: GUILBERT EXPRESS S.A., F-75011 Paris (FR)
(72) Inventeur: Moumaneix, Francis, F-75011 Paris (FR); Le Marchand, Alain, F-95570 Villaine sous Bois (FR); Guillou, Yves, F-77500 Chelles (FR)
(74) Mandataire: Plaçais, Jean-Yves

(57) **Abrégé**

Le dispositif comprend un premier profilé en T (55) fixé sur un châssis (57), un second profilé (61) de même section que le premier, et une multiplicité de supports de brûleurs (64-70) associés chacun à un brûleur (91) et pouvant être fixés chacun au choix sur les deux profilés ou sur un seul d'entre eux, formant une rampe de brûleurs dans laquelle la position de chaque brûleur est réglable de façon continue, le second profilé étant fixé au châssis, par l'intermédiaire du premier profilé et des supports de brûleurs montés en commun sur les deux profilés, en une position réglable pour ajuster la longueur de la rampe.

## Description

L'invention concerne un dispositif de traitement par la chaleur d'une surface de travail sensiblement horizontale, notamment en vue du désherbage.

Les inconvénients du désherbage chimique, notamment en matière de pollution tant de l'environnement que des cultures à protéger elles-mêmes, ont conduit au développement, encore limité notamment pour des raisons de coût, du désherbage thermique.

Il existe en particulier des dispositifs à cet effet, comprenant un châssis propre à être déplacé au-dessus du sol dans une direction de déplacement horizontale et une multiplicité de brûleurs associés à des moyens d'alimentation en fluide combustible, alignés sur le châssis dans une direction horizontale d'étalement.

Le but de l'invention est d'améliorer les dispositifs connus, notamment sur un ou plusieurs des points suivants :
- réduction du coût de fabrication et du coût d'utilisation du dispositif;
- obtention d'une gamme étendue d'appareils adaptés à différentes cultures allant des très petites surfaces aux très grandes surfaces et utilisant des principes de fonctionnement et des éléments constitutifs communs;
- grande souplesse d'utilisation pour un appareil donné;
- robustesse du matériel;
- fourniture à l'utilisateur d'indications pour l'aider à sélectionner les paramètres de réglage de l'appareil en fonction des caractéristiques du traitement à effectuer et des conditions extérieures.

L'invention vise notamment un dispositif du genre défini en introduction, et prévoit que chaque brûleur fait partie d'une unité de production de flamme comportant un support de brûleur propre à être fixé de façon amovible et en une position réglable continûment le long d'une barre s'étendant dans ladite direction d'étalement.

Bien que le dispositif selon l'invention soit particulièrement adapté à la fonction de désherbage, il peut également être utilisé pour d'autres applications, par exemple pour les travaux d'étanchéité de terrasses. Dans ce qui suit, "sol" doit être compris comme synonyme de "surface de travail". Par ailleurs, le traitement de la surface de travail n'est pas nécessairement réalisé directement par la flamme des brûleurs. Il peut l'être par exemple par un rayonnement infrarouge produit par des sources associées aux brûleurs, elles-mêmes chauffées par les flammes.

Sauf indication contraire, la référence à une direction horizontale s'entend lorsque le dispositif s'appuie sur une surface de travail elle-même horizontale. Une telle direction peut devenir oblique lorsque la surface de travail est inclinée ou accidentée.

D'autres caractéristiques, complémentaires ou alternatives, du dispositif selon l'invention sont énoncées ci-après :
- La direction d'étalement est sensiblement perpendiculaire à ladite direction de déplacement.
- Chaque brûleur est propre à émettre une flamme dirigée selon un axe et est monté sur son support avec possibilité d'orientation dudit axe autour d'un axe de pivotement et perpendiculairement à celui-ci, les axes de pivotement de tous les brûleurs étant parallèles entre eux et perpendiculaires à ladite direction d'étalement.
- Ladite barre comprend un premier profilé et au moins un second profilé, s'étendant côte à côte selon ladite direction d'étalement, le premier profilé et/ou au moins un support de brûleur étant fixé en permanence au châssis, chaque support de brûleur est propre à être monté et immobilisé indifféremment sur les premier et second profilés juxtaposés ou sur un seul d'entre eux en l'absence de l'autre, sans modification de sa position dans le plan de la section transversale des profilés, et l'ensemble des unités de production de flamme comprend un premier sous-ensemble d'au moins deux unités dont les supports sont montés sur les deux profilés et assurent la solidarisation de ceux-ci entre eux et au châssis, par l'intermédiaire du premier profilé, la position du second profilé au moins étant réglable dans la direction d'étalement.
- Ledit ensemble comprend un second sous-ensemble d'au moins une unité dont le support est monté sur un seul profilé, dans une région de celui-ci s'étendant au-delà de la longueur de l'autre profilé.
- Chaque support de brûleur comprend deux mâchoires et des moyens de serrage propres à solliciter les deux mâchoires l'une vers l'autre en pinçant entre elles chacun des deux profilés, chaque mâchoire présentant des surfaces de coopération avec chaque profilé.
- Les surfaces de coopération respectives des deux mâchoires, ainsi que les régions correspondantes de chaque profilé, sont sensiblement symétriques les unes des autres par rapport à un premier plan de symétrie parallèle à la direction d'étalement et les surfaces de coopération des mâchoires avec les deux profilés respectivement, ainsi que les régions correspondantes des profilé respectifs, sont symétriques les unes des autres par rapport à un second plan de symétrie parallèle à la direction d'étalement et perpendiculaire au premier plan de symétrie, les deux profilés étant disposés respectivement de part et d'autre du second plan de symétrie et étant décalés l'un par rapport à l'autre selon une direction contenue dans le premier plan de symétrie.
- Chaque profilé présente une aile faisant saillie en direction d'une mâchoire et ladite mâchoire présente deux encoches pour recevoir les ailes respectives des deux profilés, l'aile d'un profilé coopérant avec l'encoche correspondante, en l'absence de l'autre profilé, pour bloquer la mâchoire, sous l'action des moyens de serrage, dans une position par rapport à l'autre mâchoire du même support pratiquement identique à la position prise lors du serrage sur les deux profilés.
- Chaque profilé comprend une âme s'étendant selon le premier plan de symétrie et au moins une aile d'épaisseur à peu près uniforme s'étendant perpendiculairement à l'âme, symétriquement de part et d'autre dudit plan à partir du bord de l'âme tourné vers l'autre profilé.
- Les moyens de serrage comprennent une tige de serrage, par exemple filetée, le long de laquelle les deux mâchoires peuvent coulisser l'une vers l'autre, les ailes des profilés étant avantageusement pratiquement en contact avec ladite tige.
- L'axe de la tige de serrage s'étend dans le second plan de symétrie perpendiculairement au premier plan de symétrie.
- Chaque brûleur est fixé de façon amovible sur son support.
- Il comprend un jeu de brûleurs de différentes puissances propres à être montés au choix et en nombre variable sur des supports.
- Chaque brûleur est solidaire d'une tige de brûleur qui est fixée sur le support par pincement entre deux brides à l'aide des moyens de serrage, la tige de serrage traversant successivement les deux mâchoires et les deux brides.
- Les deux brides présentent des lèvres respectives inclinées l'une vers l'autre et venant en contact avec la tige de brûleur, au-delà de l'axe de celle-ci par rapport à la tige de serrage, de façon à solliciter la tige de brûleur en direction de la tige de serrage, contre une butée.
- Ladite butée est un galet entourant la tige de serrage et présentant une gorge annulaire ouverte radialement vers l'extérieur pour recevoir la tige de brûleur.
- L'axe de la tige de brûleur constitue l'axe de la flamme et les brides peuvent être placées par rapport aux mâchoires dans une position angulaire réglable autour de l'axe de la tige de serrage, qui constitue ledit axe de pivotement.
- Les mâchoires et les brides présentent des moyens d'indexation mutuelle permettant d'orienter chaque brûleur dans des directions prédéfinies.
- Les moyens d'indexation mutuelle comprennent au moins une saillie prévue sur une mâchoire et une multiplicité d'évidements ménagés dans au moins une bride de chaque support de brûleur, ladite mâchoire pouvant être montée sur la barre, par rotation d'un demi-tour autour de l'axe de pivotement, soit dans une position où la saillie peut coopérer avec les évidements, soit dans une position où la saillie reste hors de contact avec la bride pour réaliser un réglage d'orientation continu.
- Les moyens d'alimentation comprennent un bloc de distribution propre à être relié à une réserve de fluide, un bloc d'arrivée de fluide associé à chaque brûleur et présentant une entrée de fluide, une sortie de fluide vers ledit brûleur et une sortie de fluide vers l'extérieur, au moins une conduite flexible d'arrivée de fluide reliant le bloc de distribution à l'entrée d'un bloc d'arrivée et une série de conduites flexibles de transmission de fluide reliant chacune la sortie extérieure et l'entrée de deux blocs d'arrivée voisins respectivement de façon que chaque brûleur soit relié à une conduite d'arrivée par l'intermédiaire de son propre bloc d'arrivée et le cas échéant d'autres blocs d'arrivée et de conduites de transmission correspondantes.
- Les moyens d'alimentation comprennent un détendeur de gaz combustible comportant plusieurs positions de travail correspondant à des pressions préréglées et pour lesquelles un même brûleur fonctionne à des puissances thermiques différentes.
- Le châssis définit un logement pour au moins un réservoir cylindrique de propane liquéfié sous pression.
- Ledit réservoir est logé debout avec l'ouverture de sortie vers le haut.
- Le châssis comporte des moyens pour sa fixation sur un tracteur agricole, notamment à l'arrière de celui-ci.
- Il comprend des moyens de télécommande permettant l'interruption immédiate de l'arrivée de fluide aux brûleurs à partir du poste de conduite du tracteur.
- Le châssis comprend une partie avant fixe portée à distance du sol, supportant des réservoirs de gaz combustible et le cas échéant ledit bloc de distribution et/ou ledit détendeur, et une partie arrière mobile articulée sur la partie fixe autour d'un axe parallèle à ladite direction d'étalement, portant ladite barre et les unités de production de flamme, la partie arrière pouvant prendre une position de travail abaissée dans laquelle les brûleurs sont proches du sol et une position de repos relevée.
- La partie arrière est actionnée par un vérin hydraulique porté par le châssis et propre à être relié au circuit hydraulique du tracteur.
- Les moyens d'alimentation comprennent des moyens de commande couplés audit vérin hydraulique de façon à mettre les brûleurs en veilleuse lorsque la partie arrière est relevée.
- Le châssis définit des logements pouvant recevoir chacun, au choix, des réservoirs cylindriques d'un même diamètre et de deux hauteurs différentes, par exemple des réservoirs de propane de 13 kg et de 35 kg, et présente des éléments de retenue supérieurs propres à coopérer seulement avec les réservoirs de plus grande hauteur et des éléments de retenue inférieurs propres à coopérer avec les réservoirs des deux types.
- Le châssis comprend au moins deux montants décalés l'un par rapport à l'autre dans la direction de déplacement, deux montants voisins délimitant entre eux un logement pour une rangée de réservoirs de gaz combustible alignés latéralement, chaque montant s'étendant latéralement sur une distance correspondant à peu près à la longueur d'une rangée.
- Au moins le montant d'extrémité avant comprend deux jambages inférieurs s'écartant l'un de l'autre latéralement et vers le bas à partir d'une zone de jonction, ladite zone de jonction et les extrémités inférieures des deux jambages étant munis d'éléments de prise permettant la fixation en trois points du châssis sur le tracteur.
- Chaque montant comprenant deux jambages inférieurs comprend également deux jambages supérieurs s'écartant l'un de l'autre latéralement et vers le haut à partir dudit point de jonction.
- Chaque montant est formé par assemblage de deux pièces sensiblement identiques constituant chacune les jambages inférieur et supérieur situés d'un même côté.
- Un élément de retenue inférieur et un élément de retenue supérieur pour une même rangée de réservoirs sont montés respectivement sur les jambages inférieurs et sur les jambages supérieurs d'un même montant.
- Le châssis comprend un élément de structure allongé médian s'étendant obliquement vers le bas et vers l'arrière à partir de la zone de jonction du montant d'extrémité avant et deux éléments de structure allongés inférieurs se rapprochant l'un de l'autre vers l'arrière, respectivement à partir des extrémités inférieures des deux jambages inférieurs de ce même montant, les extrémités arrière de ces trois éléments allongés étant réunies entre elles en une zone de jonction arrière.
- Chaque rangée de réservoirs est composée de deux sous-ensembles pouvant être introduits latéralement et disposés respectivement de part et d'autre de l'élément allongé médian, la course d'introduction d'un premier réservoir de chaque sous-ensemble étant limitée par cet élément.
- À chaque rangée de réservoirs est associé au moins un élément de retenue monté pivotant autour d'un axe horizontal s'étendant dans la direction d'alignement de la rangée et présentant deux bras, et le cas échéant des intercalaires, s'étendant sensiblement radialement par rapport à cet axe, les bras faisant saillie aux deux extrémités de la rangée respectivement, et chaque intercalaire s'insérant entre deux réservoirs adjacents d'un même sous-ensemble, dans une position de retenue, et les bras et les intercalaires s'effaçant pour laisser passer les réservoirs dans une position de chargement/déchargement.
- Il comprend deux montants au moins, et/ou deux éléments de retenue au moins, sensiblement identiques entre eux.
- Il comprend un bloc de distribution de gaz comportant des éléments collecteurs associés chacun à une rangée de réservoirs et présentant chacun deux faces frontales opposées mutuellement parallèles et une cavité interne débouchant dans les deux faces frontales et communiquant avec des orifices d'entrée latéraux qui peuvent être reliés chacun à l'un des réservoirs de la rangée, et des moyens d'assemblage de ces éléments sous forme d'un empilement dans lequel ils sont en contact mutuel par leurs faces frontales, les cavités des différents éléments collecteurs étant raccordés entre elles de façon étanche, à travers les faces frontales en contact mutuel, pour former une conduite collectrice communiquant avec l'ensemble des orifices d'entrée et débouchant en aval par l'une des faces frontales à une extrémité de l'empilement.
- Les moyens d'alimentation comprennent un robinet de sécurité permettant l'interruption immédiate de l'arrivée de fluide aux brûleurs et pouvant être repéré facilement et actionné manuellement aussi bien depuis les côtés latéraux que depuis l'arrière du dispositif.
- Les moyens d'alimentation comprennent un robinet de sécurité muni d'un poussoir d'actionnement manuel direct et d'un câble d'actionnement à distance relié au poste de conduite du tracteur, le poussoir et le câble agissant coaxialement sur une même pièce qui coulisse dans un corps pour la fermeture du robinet.
- Le poussoir fait saillie vers le haut et le câble part vers le bas, à partir du corps.
- Les moyens d'alimentation comprennent un robinet de réglage de veilleuse muni d'un organe de manoeuvre rotatif disposé à côté du poussoir et dont l'axe de rotation est parallèle à l'axe du poussoir.
- Il comprend un bloc de distribution de gaz rassemblant sous une forme compacte et rigide toute les fonctions de commande d'alimentation des brûleurs en gaz combustible, relié par des conduites en amont aux réservoirs et en aval aux brûleurs.
- Le bloc de distribution comprend un corps en une seule pièce traversé par le gaz alimentant les brûleurs et définissant pour celui-ci un trajet sur lequel sont interposés des moyens pour la réalisation d'une ou plusieurs des fonctions suivantes: interruption de l'alimentation, mise en veilleuse, réglage de veilleuse, ledit empilement d'éléments collecteurs pouvant être monté en amont et ledit détendeur en aval sur le corps.
- Il comprend au moins un accessoire d'extension arrière comportant un profilé de liaison de même section que le premier profilé et pouvant être fixé dans l'alignement de celui-ci, par l'intermédiaire du second profilé, grâce à un support de liaison analogue aux supports des brûleurs, une barre de liaison s'étendant vers l'arrière à partir du profilé de liaison et portant au moins un profilé additionnel parallèle au profilé de liaison et dont la section transversale se déduit de celle de ce dernier par une translation vers l'arrière, le profilé de liaison et le ou les profilés additionnels ayant une longueur petite par rapport à celle des premier et second profilés et pouvant recevoir des unités de production de flamme respectives mutuellement alignées pour le traitement du sol le long d'une ligne s'étendant dans la direction de déplacement sur l'un des côtés du châssis.
- Il comprend deux accessoires d'extension arrière destinés à être fixés respectivement à gauche et à droite du châssis, et le cas échéant au moins un profilé complémentaire s'étendant latéralement de l'un à l'autre en étant fixé à des profilés additionnels respectifs de ceux-ci par des supports, le profilé complémentaire pouvant recevoir des unités de production de flamme et/ou des outils pour le traitement mécanique du sol.
- Il comprend au moins un accessoire d'extension latérale comportant un profilé d'extension, notamment d'une longueur de plusieurs mètres, propre à être fixé à une extrémité sur un côté du châssis de façon à s'étendre vers l'extérieur selon la direction d'étalement, et muni à son extrémité opposée d'une roue propre à rouler sur le sol, le profilé d'extension pouvant recevoir des unités de production de flamme et étant articulé sur le châssis de façon à pivoter de haut en bas pour suivre les inégalités du sol et/ou pour être replié vers le haut en limitant l'encombrement en largeur du dispositif en dehors de ses périodes d'utilisation.
- Il comprend une calculatrice électronique programmée de façon à indiquer à l'utilisateur, en fonction de données d'entrée constituées par les caractéristiques d'un traitement à effectuer et des conditions extérieures, des données de sortie constituées par des valeurs de réglage permettant de réaliser ce traitement de façon optimale, notamment en évitant des débits excessifs de gaz conduisant à une chute de pression dans les réservoirs, ainsi que la durée de traitement correspondante.
- Le programme prend en compte l'une au moins des données suivantes:
   - pour les caractéristiques du traitement: superficie du sol à traiter, largeur de la bande - ou largeur de chaque bande élémentaire et de l'intervalle entre bandes et nombre de bandes élémentaires - à traiter à chaque passage, nombre de brûleurs utilisés, nature et degré de développement des herbes à détruire, ;
   - pour les conditions extérieures: nombre et contenance des réservoirs de gaz disponibles, température atmosphérique, vitesse du vent, niveau de précipitation;
   - pour les valeurs de réglage: nombre et type de brûleurs, position de travail du détendeur, distance des brûleurs au sol et leur inclinaison, vitesse de déplacement du tracteur, durée du traitement, quantité de gaz consommée.
- La calculatrice programmée affiche sur un écran des messages successifs demandant à l'utilisateur d'introduire les données d'entrée au moyen d'un clavier, puis affiche les données de sortie.
- Lorsqu'il n'est pas possible de satisfaire les conditions définies par les données d'entrée, ou que la durée de traitement calculée ne convient pas à l'utilisateur, le programme offre à celui-ci la possibilité de déclencher l'affichage d'une nouvelle série de messages demandant chacun la confirmation ou le remplacement de l'une des données d'entrée, puis l'affichage de données de sortie tenant compte des données d'entrée ainsi modifiées.
- Il comprend des moyens de mémorisation pour conserver sous forme écrite les données d'entrée et de sortie relatives à un traitement, ainsi que le cas échéant les remarques de l'utilisateur sur celui-ci.
- Les moyens de mémorisation comprennent un bloc de formulaires préimprimés comportant des emplacements pour y écrire les données.
- La calculatrice et le cas échéant les moyens de mémorisation sont logés dans un coffret monté sur le châssis et contenant un jeu de brûleurs dans lequel peuvent être choisis les brûleurs à utiliser pour chaque traitement.
- Le châssis définit un logement pour au moins un réservoir de fluide combustible et est muni d'au moins un essieu et d'une poignée arrière transversale, formant ainsi un chariot propre à être poussé à la main.

Les caractéristiques et avantages de l'invention seront exposés plus en détail dans la description ci-après, en se référant aux dessins annexés, sur lesquels :
- la figure 1 est une vue simplifiée en perspective d'un premier mode de réalisation d'un dispositif selon l'invention monté à l'arrière d'un tracteur agricole;
- la figure 2 est une vue en perspective à plus grande échelle, montrant le même dispositif sans réservoirs de gaz et sans brûleurs;
- la figure 3 est une vue en coupe d'une unité de production de flamme montée sur deux profilés, en coupe selon un plan perpendiculaire à la direction longitudinale des deux profilés et passant par l'axe de serrage du support de brûleur;
- la figure 4 est une vue de dessus d'une mâchoire inférieure, ou de dessous d'une mâchoire supérieure, d'un support de brûleur;
- la figure 5 est une vue en coupe de l'unité de production de flamme, selon la ligne V-V de la figure 3;
- la figure 6 est une vue de dessus montrant trois brûleurs voisins montés sur les deux profilés, et leurs conduites d'alimentation en gaz;
- la figure 7 montre schématiquement un bloc de distribution de gaz pour une variante du dispositif des figures 1 et 2;
- les figures 8 et 10 sont des vues en coupe longitudinale montrant des éléments du bloc de distribution de la figure 7;
- la figure 9 est une vue en coupe transversale de l'un des éléments collecteurs illustrés à la figure 8;
- la figure 11 est une vue partielle en coupe selon la ligne XI-XI de la figure 10;
- la figure 12 est une vue latérale montrant des moyens de relevage et de réglage de la partie mobile du châssis illustré aux figures 1 et 2;
- la figure 13 est une vue de dessus d'un accessoire d'extension arrière pouvant être monté sur ce même châssis;
- la figure 14 est une vue latérale en coupe montrant l'accessoire de la figure 13 sur lequel sont montés des brûleurs;
- la figure 15 est une vue en perspective montrant un accessoire d'extension latérale monté sur la base du châssis;
- la figure 16 est une vue latérale en coupe d'un coffret destiné à contenir un assortiment de brûleurs fournis avec l'appareil;
- la figure 17 est une vue de dessus de ce coffret;
- la figure 18 est une vue de côté d'un second mode de réalisation d'un dispositif selon l'invention;
- la figure 19 est une vue de dessus de ce dispositif;
- la figure 20 est une vue partielle de dessus montrant l'essieu avant du dispositif en position d'extension;
- la figure 21 est une vue en perspective du dispositif;
- la figure 22 est une vue analogue à la figure 5, montrant une unité de production de flamme du dispositif des figures 19 à 22; et
- la figure 23 représente un schéma logique utilisable pour la programmation d'une calculatrice fournie avec le dispositif des figures 1 et 2;

Les dessins annexés sont pour l'essentiel de caractère certain. Ils sont donc à considérer comme incorporés à la description, et pourront donc non seulement servir à compléter celle-ci, mais aussi contribuer à la définition de l'invention, le cas échéant.

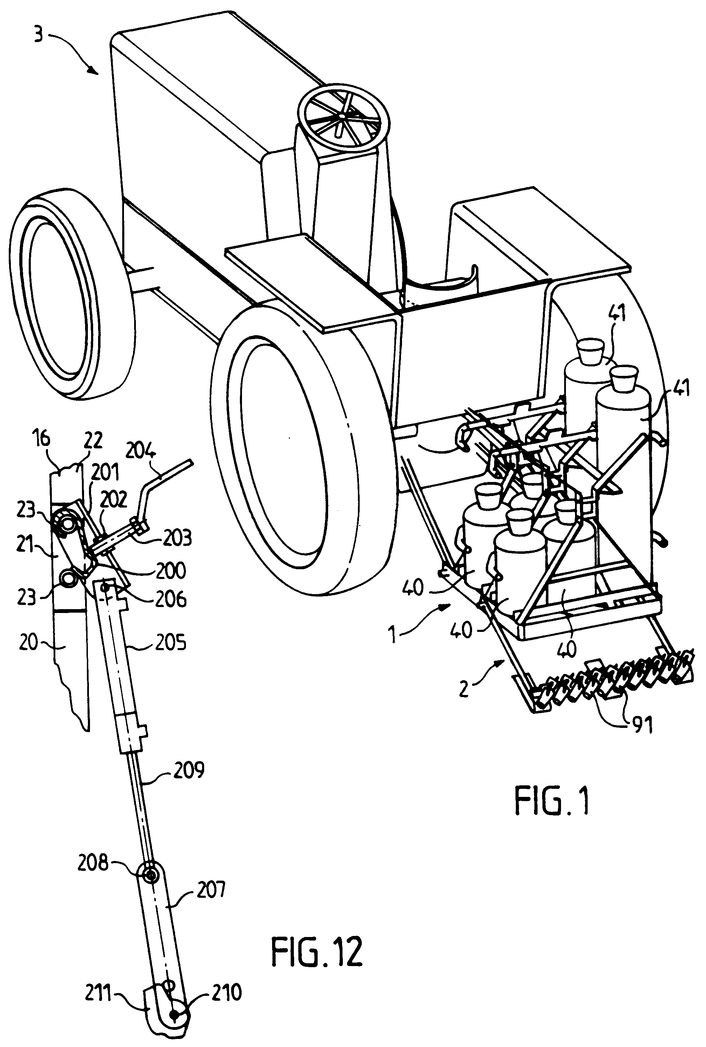

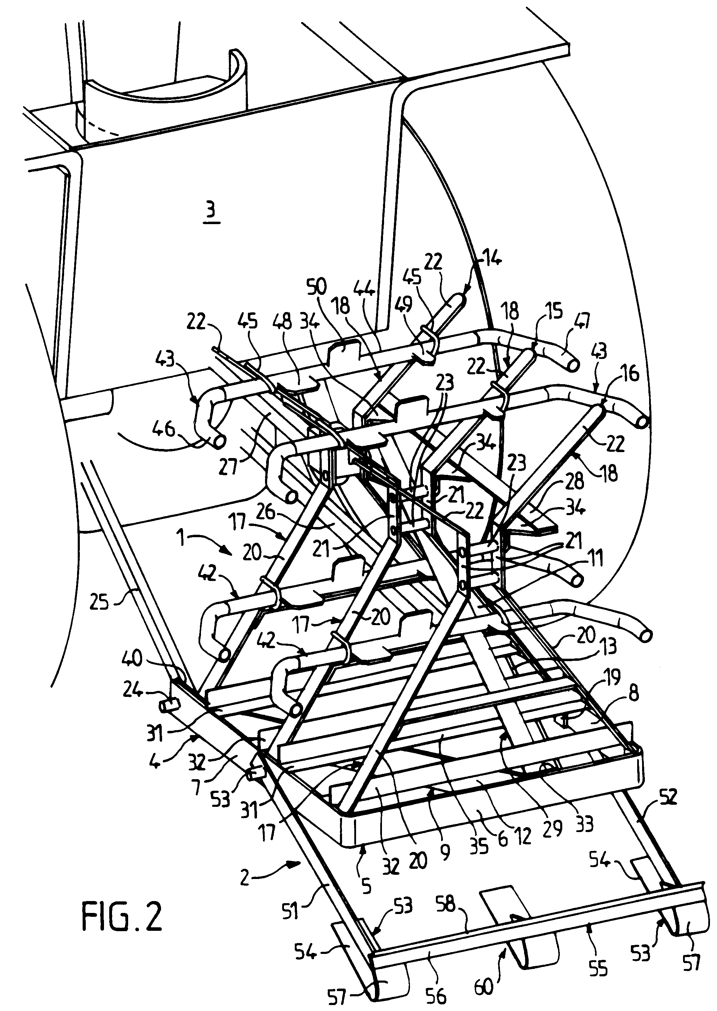

Le désherbeur illustré aux figures 1 et 2 comprend un châssis à base de profilés en acier composé essentiellement de deux parties rigides 1 et 2 articulées l'une sur l'autre, la partie 1 étant directement fixée à l'arrière d'un tracteur agricole 3. La partie 1 comprend une base horizontale 4 située à distance au-dessus du sol et comportant deux bandes plates 5 et 9 dont la largeur est orientée verticalement. La bande 5 est pliée pour former un U dont le fond 6 s'étend dans la direction perpendiculaire à la direction avant-arrière du tracteur, appelée ci-après direction latérale, et dont les branches 7 et 8 s'étendent vers l'avant à partir du fond 6, respectivement du côté gauche et du côté droit du châssis. La bande 9, disposée à l'intérieur du U formé par la bande 5, est appliquée à plat et soudée, par ses deux régions d'extrémité 10 et 11, respectivement aux régions d'extrémité avant des branches 7 et 8, et par une région intermédiaire 33 à une région intermédiaire du fond 6, la région 33 étant reliée aux régions 10 et 11 par des régions allongées obliques 12 et 13 respectivement. Ces soudures, comme toutes celles mentionnées dans la présente description, peuvent être remplacées par des assemblages boulonnés.

Trois montants identiques 14, 15 et 16 s'élèvent à partir de la base 4, au voisinage des extrémités avant et arrière de celle-ci pour les montants 14 et 16 respectivement, et à mi-distance des précédents pour le montant 15. Chaque montant comprend un élément gauche 17 et un élément droit 18 identiques entre eux, formés chacun à partir d'une bande plate pliée dont la largeur est orientée dans la direction avant-arrière. Chacun des éléments 17 et 18 présente une région d'extrémité inférieure verticale 19 appliquée et soudée sur la face interne de l'une des branches 7 et 8, à laquelle fait suite un jambage inférieur 20 s'élevant obliquement jusqu'à une faible distance du plan vertical médian du châssis. Le jambage inférieur est suivi à son tour d'une courte région intermédiaire verticale 21, puis d'un jambage supérieur 22 s'écartant obliquement latéralement et vers le haut. Les régions intermédiaires verticales 21 des éléments 17 et 18 d'un même montant sont reliées entre elles par deux tiges transversales cylindriques superposées 23. Chaque montant a ainsi une forme générale en X, et est encore renforcé par une traverse 35 sous forme d'une bande d'acier s'étendant horizontalement d'un jambage inférieur à l'autre et soudée à ceux-ci par ses régions d'extrémité repliées obliquement. Une tige cylindrique 24 s'étendant dans la direction latérale traverse la région d'extrémité avant de la branche 7 et/ou la région d'extrémité 10 de la bande 9 et/ou la région inférieure 19 de l'élément 17 du montant 14 en étant liée de façon rigide à ces éléments. Cette tige 24, une tige semblable non visible sur les dessins, fixée de la même façon du côté droit du châssis, et l'une des tiges 23 du montant 14 sont supportées respectivement par trois bras 25, 26 et 27 faisant saillie à l'arrière du tracteur et appartenant à un système de fixation en trois points équipant celui-ci.

La partie fixe 1 du châssis comprend encore deux bandes plates 28 et 29 dont la largeur est orientée dans la direction latérale, disposées l'une au-dessus de l'autre et allongées dans un plan vertical parallèle au plan longitudinal médian et décalé vers la droite par rapport à celui-ci. La bande 28, droite et horizontale, est située au niveau de la jonction entre les régions 21 et 22 des éléments des montants. Elle est reliée rigidement aux régions 21 des éléments 18 par l'intermédiaire de consoles respectives 34. Dans une variante non illustrée, la bande 28, sans changement de sa direction longitudinale, est disposée obliquement pour être soudée à plat sur les jambages supérieurs 22 des montants. La bande 29 s'étend obliquement, son extrémité supérieure avant étant reliée rigidement à la région 21 de l'élément 18 du montant avant 14, tandis que son extrémité inférieure arrière est repliée verticalement et soudée sur la face avant de la région intermédiaire 33 de la bande 9.

A chacun des deux intervalles délimités par les trois montants 14, 15 et 16 sont associées une cornière avant 31 et une cornière arrière 32. Une aile de chacune de ces cornières repose horizontalement, et est soudée, sur les bords supérieurs des branches 7 et 8 de la bande 5 et des régions obliques 12 et 13 de la bande 9, l'autre aile s'élevant verticalement et étant adossée et soudée aux deux jambages inférieurs 20 d'un même montant. Les trois montants et les quatre cornières définissent deux logements pouvant recevoir chacun une rangée de trois réservoirs de propane liquéfié sous pression alignés dans la direction latérale, chaque réservoir pouvant être au choix un réservoir de 13 kg ou un réservoir de 35 kg, ces deux types de réservoirs ayant le même diamètre et des hauteurs différentes. A titre d'exemple, la figure 1 montre, pour chaque rangée, deux réservoirs 40 de 13 kg et un réservoir 41 de 35 kg, situé à l'extrémité droite de la rangée. Les réservoirs reposent sur les ailes horizontales des cornières. Ils sont immobilisés vers l'avant et vers l'arrière par les ailes verticales des cornières et par les montants et dans la direction latérale d'une part par les bandes 28 et 29, d'autre part par des éléments de retenue pivotants 42, 43. A chaque rangée sont associés un élément de retenue inférieur 42 et un élément de retenue supérieur 43 montés respectivement sur les jambages inférieurs 20 et sur les jambages supérieurs 22 de l'un des montants, à savoir le montant avant 14 pour la rangée avant et le montant intermédiaire 15 pour la rangée arrière. Les éléments inférieurs 42 sont destinés à coopérer aussi bien avec des réservoirs de 13 kg qu'avec des réservoirs de 35 kg, et les éléments supérieurs 43 seulement avec des réservoirs de 35 kg. Les quatre éléments de retenue sont formés à partir d'un tube d'acier et sont identiques entre eux. La description ci-après, en référence à la figure 2, de l'élément de retenue supérieur avant, est donc également valable pour les autres éléments de retenue. L'élément 43 présente une région tubulaire médiane 44 s'étendant horizontalement dans la direction latérale, traversant deux cavaliers 45 soudés respectivement sur les deux jambages 22 (ou 20) du montant correspondant, qui assurent son guidage en pivotement autour de son propre axe. Les régions d'extrémité gauche 46 et droite 47 du tube sont recourbées vers l'arrière, dans la position de retenue montrée sur les figures, pour former des bras suivant à peu près le contour des réservoirs situés aux extrémités gauche et droite de la rangée, de façon à retenir ces réservoirs latéralement vers l'extérieur. L'orientation vers l'arrière des bras évite qu'il risquent de s'accrocher aux branches des plantes cultivées. Deux pattes 48, 49 font saillie radialement vers l'arrière à partir de la région 44, respectivement immédiatement à droite du cavalier gauche et immédiatement à gauche du cavalier droit, et immobilisent l'élément de retenue dans la direction latérale. La patte 48 fait en outre saillie entre les deux réservoirs situés à gauche des bandes 28 et 29 dans la rangée et maintient ces deux réservoirs à distance l'un de l'autre. La patte 49 est située au-dessus de la bande 28 (au-dessous pour les éléments de retenue inférieurs) et par conséquent entre le réservoir placé à droite des bandes 28 et 29 et ceux placés à gauche de celles-ci, et n'interfère donc pas avec les réservoirs. Une autre patte 50 s'étend radialement vers le haut à mi-longueur de la région tubulaire 44. Si l'élément de retenue tend à basculer sous l'effet du poids des bras 46 et 47, la patte 50 vient en appui sur le réservoir médian de la rangée pour empêcher ce basculement. Les bras 46 et 47 et les pattes 48 et 49 peuvent être relevés par un pivotement d'un quart de tour de l'élément de retenue pour permettre la mise en place ou le déchargement des réservoirs. Lors de la mise en place, la course d'introduction du réservoir de droite et du premier réservoir introduit à gauche est limitée par les bandes 28 et 29. Les réservoirs étant immobilisés individuellement, dans chaque rangée, par les bandes 28 et 29, les bras 46 et 47 et la patte 48, il est possible de réaliser des rangées incomplètes si on ne dispose pas de six réservoirs. On peut également former une seule rangée si le nombre de réservoirs disponibles est inférieur à quatre.

La bande en U 5, les montants et les cornières sont disposés symétriquement par rapport au plan vertical médian du désherbeur. En revanche, le fait que les réservoirs sont en nombre impair dans chaque rangée conduit à une disposition dissymétrique des bandes 28 et 29 et par suite de la bande en V 9 qui coopère avec la bande 29 pour former une structure tétraédrique rigide reliée directement aux trois points de fixation sur le tracteur, assurant une grande rigidité de la partie fixe 1 du châssis. Cette disposition dissymétrique, qui n'entraîne aucun inconvénient quant à la robustesse de l'appareil, serait supprimée si chaque rangée comportait un nombre pair de réservoirs, par exemple deux ou quatre. Le choix de trois réservoirs permet de donner au châssis une largeur d'environ 1,10 m, correspondant à l'écartement le plus faible rencontré entre les rangs de vignes.

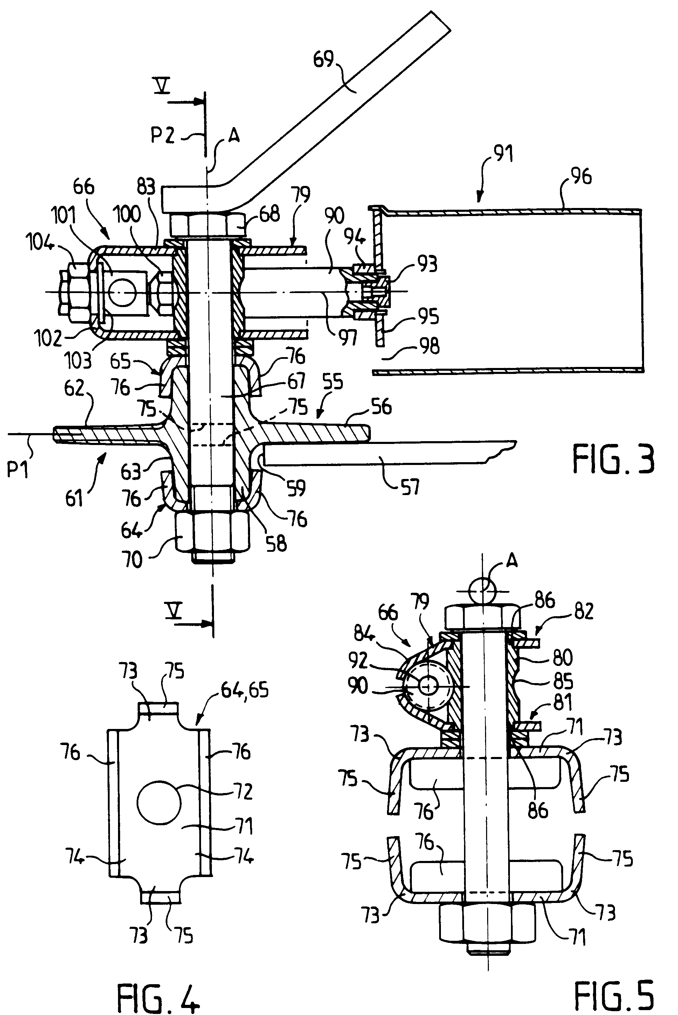

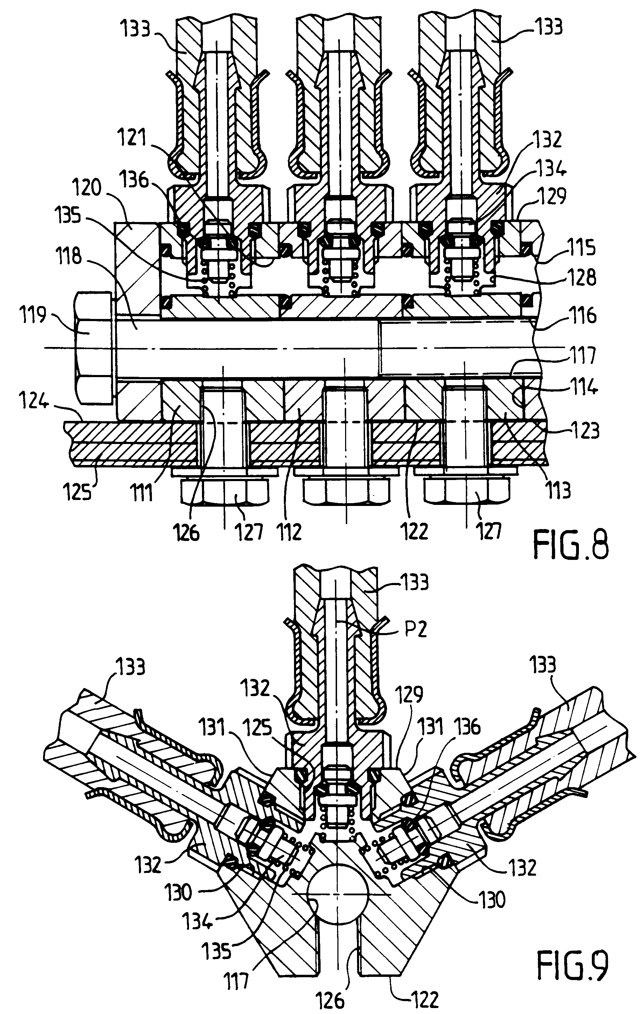

La partie 2 du châssis, également symétrique par rapport au plan longitudinal médian, comprend deux bandes plates 51 et 52 situées dans des plans verticaux parallèles à ce dernier plan et dont les extrémités avant recouvrent les faces extérieures des branches 7 et 8 respectivement de la bande en U 5, avec possibilité de pivotement autour de tiges 53 solidaires de celles-ci et s'étendant dans la direction transversale. Dans le mode de réalisation des figures 1 et 2, les tiges 53 sont situées à peu près au niveau des extrémités inférieures des jambages inférieurs 20 du montant médian 15. En variante, elles peuvent se trouver à l'arrière de la partie 1 du châssis. Chacune des bandes 51 et 52 est reliée dans sa région d'extrémité arrière à un patin 53 constitué par une bande métallique plate courbée à peu près en forme de J, la branche longue du J étant soudée par sa face interne au bord inférieur de la bande 51, 52. Les deux patins 53 sont reliés mutuellement par un profilé 55, qui est un profilé normalisé en T de 50 x 50 mm. L'âme 56 de ce profilé est soudée à ses deux extrémités sur les extrémités libres des branches courtes 57 des deux patins 54 respectivement, sur la face extérieure de ces branches. L'aile 58 du profilé s'étend en regard du bord libre d'extrémité 59 (figure 3) de la branche 57. Un troisième patin 60 identique aux patins 53 est soudé de la même façon que les précédents à l'âme 56 du profilé, à mi-longueur de celui-ci. La partie 2 du châssis peut être déplacée par rapport à la partie 1, au moyen d'un système de relevage, omis aux figures 1 et 2 pour une meilleure lisibilité, et représenté à la figure 12, entre une position relevée dans laquelle les bandes 51 et 52 s'étendent à peu près horizontalement et la position abaissée illustrée sur les figures 1 et 2. La position relevée est utilisée pour le stockage de l'appareil, sa mise en place sur le tracteur et son démontage, son transport jusqu'au lieu d'utilisation et les manoeuvres sur le terrain. La position abaissée sert lors de l'application de la flamme. Les patins 53 et 60 sont alors proches du sol, et peuvent glisser sur celui-ci, avec relèvement momentané de la partie 2, pour en suivre les irrégularités. Le système de relevage comprend une pièce d'appui 200 suspendue à la tige 23 supérieure du montant arrière 16 et s'appuyant d'arrière en avant sur la tige 23 inférieure de ce même montant. Un étrier 201 est monté pivotant sur la tige 23 supérieure et présente une douille taraudée 202 dans laquelle se visse une tige filetée 203 dont une extrémité s'appuie sur la face arrière de la pièce 200 et dont l'autre extrémité est munie d'une poignée de manoeuvre 204. Le cylindre 205 d'un vérin hydraulique relié au circuit hydraulique du tracteur 3 est articulé en 206 sur l'étrier 201, parallèlement, en arrière et au-dessous de l'axe de la tige 23 supérieure. Une bielle 207 est articulée à son extrémité supérieure, en 208, à la tige 209 du vérin, et à son extrémité inférieure, en 210, à une pièce de liaison 211 solidaire du patin 60. La commande du vérin permet donc d'abaisser la partie 2 du châssis lorsque la tige 209 est sortie, et de la relever lorsque la tige est rentrée. De plus, le vissage de la tige 203 fait pivoter l'étrier 201 vers l'arrière et vers le haut, tirant ainsi vers le haut le vérin 205, 209, la bielle 207 et la partie 2. Inversement, lorsqu'on dévisse la tige 203, la partie 2 redescend sous son propre poids. On peut ainsi régler de façon précise la hauteur des brûleurs par rapport au sol, en position de travail. La pièce 211 peut être soudée à un tube non représenté d'un diamètre de 80 mm dont les deux extrémités sont soudées à plat sur les faces internes des bandes 51 et 52. Un tel tube renforce la rigidité de la partie 2, ce qui est particulièrement utile lorsque des efforts notables sont exercés sur la barre porte-brûleurs.

L'appareil est livré avec un second profilé 61, montré à la figure 3, identique au profilé 55 et présentant par conséquent une âme 62 et une aile 63. Les deux profilés, ainsi que des supports de brûleurs dont l'un est représenté aux figures 3 et 5, sont assemblés entre eux de telle façon que les ailes 58 et 63 soient en regard l'une de l'autre, les âmes 56 et 62 étant situées dans un même plan P1 et s'étendant chacune, à partir de l'aile correspondante, à l'opposé de l'autre profilé. Ce plan P1 constitue un plan de symétrie pour chacun des deux profilés, tandis que ceux-ci sont symétriques l'un de l'autre par rapport à un plan P2, perpendiculaire à P1 et parallèle à la direction longitudinale des profilés, et passant entre les deux ailes 58 et 63. Chaque support de brûleur comprend une mâchoire inférieure 64, une mâchoire supérieure 65 et une partie orientable 66, enfilées dans cet ordre sur une tige cylindrique 67 dont l'axe A est contenu dans le plan P2 et perpendiculaire au plan P1. La tige 67 présente une tête 68 qui s'appuie sur le dessus de la partie orientable 66, solidaire d'une poignée de manoeuvre 69. Un écrou 70, soudé sur le dessous de la mâchoire inférieure 64, coopère avec un filetage prévu dans la région d'extrémité inférieure de la tige 67.

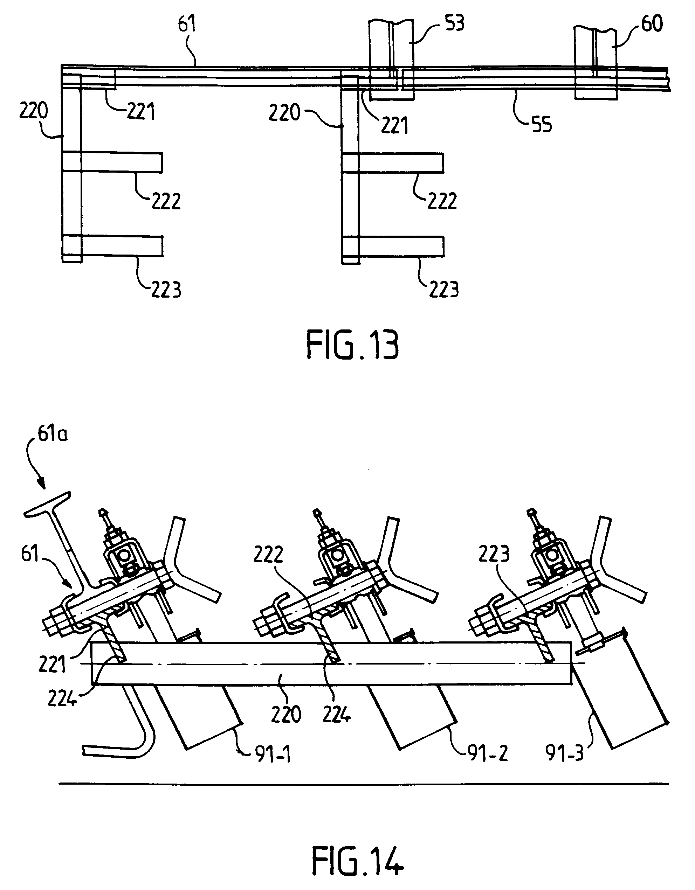

Les mâchoires 64 et 65 sont identiques entre elles et formées chacune à partir d'une plaque de tôle en forme de croix. La région centrale 71 de la croix, percée d'un trou central 72 pour le passage de la tige 67, est allongée dans la direction longitudinale des profilés, et les branches 73 de la croix s'étendant dans cette même direction sont plus étroites que les branches 74 qui s'étendent perpendiculairement à cette direction. Les quatre branches sont recourbées en dehors du plan de la région centrale 71, vers le haut pour la mâchoire inférieure 64 et vers le bas pour la mâchoire supérieure 65, en formant des pattes, les pattes 75 formées par les branches 73 s'étendant sur une longueur axiale plus grande que les pattes 76 formées par les branches 74. Le vissage de la tige 67 dans l'écrou 70 entraîne le serrage, entre ce dernier et la tête 68, de l'empilement formé par la mâchoire inférieure 64, les ailes 58 et 63 des deux profilés, la mâchoire supérieure 65 et la partie orientable 66. En position serrée, les branches 73 et les pattes 75 des mâchoires s'appuient sur les bords libres et sur les faces tournées à l'opposé l'une de l'autre des ailes des deux profilés, tandis que les faces tournées l'une vers l'autre de ces mêmes ailes s'appuient sur les bords des pattes 75, dont la largeur est au moins égale au diamètre de la tige 67. Ainsi, chaque patte 76 définit avec les deux pattes 75 de la même mâchoire, qui sont écartées d'une faible distance par rapport aux pattes 75 de l'autre mâchoire, une encoche pour recevoir la demi-aile supérieure ou la demi-aile inférieure d'un profilé. Les deux mâchoires peuvent être serrées, grâce à leur configuration, sur un seul des deux profilés, sans qu'il en résulte un changement notable de la position du support de brûleur par rapport à ce profilé. Il est donc possible de faire varier la longueur de la barre formée par les profilés 55 et 61, et par conséquent de la rampe de brûleurs réalisable, la longueur minimale de la barre, égale à la longueur de chacun des profilés, étant obtenue lorsque ceux-ci sont entièrement en regard l'un de l'autre, et une longueur plus grande étant obtenue par un décalage du profilé libre 61 par rapport au profilé fixe 55 dans leur direction longitudinale. Dans ce dernier cas, l'immobilisation du profilé 61 est assurée par le serrage d'au moins deux supports de brûleurs sur l'ensemble des deux profilés, tandis que d'autres supports peuvent être montés chacun sur un seul des deux profilés, à gauche et/ou à droite de leur portion de longueur commune. Bien entendu, il est également possible de remplacer le profilé 61, identique au profilé 55, par un profilé de plus grande longueur, faisant saillie à gauche et à droite de la partie 2 du châssis. Ce profilé peut avoir la même section que les profilés 55 et 61 ou, pour une meilleure rigidité, en fonction de sa longueur, être d'un autre type normalisé, à savoir le type IPN 100 x 50 mm, présentant deux ailes dont chacune a approximativement la même section que celle du profilé en T de 50 x 50, les ailes 58 et 63 n'étant alors plus rigoureusement symétriques l'une de l'autre par rapport au plan P2. Un profilé de ce dernier type est représenté en trait fin, à la figure 14, sous la référence 61a. Pour les très grandes longueurs, des roues peuvent être montées aux extrémités libres d'un tel profilé. Il est possible également de remplacer le profilé 61 par deux profilés disposés dans le prolongement l'un de l'autre, faisant saillie respectivement vers la gauche et vers la droite par rapport à la partie mobile du châssis.

La partie orientable 66 du support de brûleur comprend un galet cylindrique 80 et une pince 79 réalisée à partir d'une tôle métallique pliée en U pour former un fond 102 et deux branches ou brides 81 et 82. Chacune de ces brides comprend une région plane 83 de forme rectangulaire, percée d'un trou, et une lèvre 84 s'étendant le long d'un grand côté du rectangle, perpendiculaire au plan du fond 102, la lèvre étant recourbée hors du plan de la région plane, vers le haut pour la bride inférieure 81 et vers le bas pour la bride supérieure 82. Le galet 80 est traversé axialement avec un faible jeu par la tige 67 et présente sur sa face radialement extérieure, à mi-longueur axiale, une gorge 85 à profil en arc de cercle. Aux deux extrémités axiales du galet, des épaulements définissent des zones 86 de diamètre extérieur réduit qui s'engagent dans les trous des brides. Des rondelles enfilées sur la tige 67 sont interposées d'une part entre la tête 68 et la bride supérieure 82, d'autre part entre la bride inférieure 81 et la mâchoire supérieure 65.

Le galet 80 et la pince 79 servent à fixer de façon rigide une tige cylindrique 90 appartenant à un brûleur 91. Cette tige présente un alésage axial 92 dont l'extrémité aval filetée reçoit un injecteur 93. L'extrémité aval de la tige 90, de diamètre extérieur réduit, est munie également d'un filetage extérieur avec lequel coopère une douille taraudée 94 solidaire d'un disque radial 95. Le disque 95 porte une tuyère tubulaire 96 qui s'étend vers l'aval au-delà de l'injecteur. La tige 90, l'injecteur 93, la douille 94, le disque 95 et la tuyère 96 sont sensiblement de révolution autour d'un axe 97 qui constitue l'axe du brûleur. Le disque 95 est percé d'un trou central pour le passage de la douille 95 et, à l'intérieur de celle-ci, de l'injecteur 93, et de trous périphériques 98 pour l'entrée d'air dans la tuyère. Lorsque la tige de serrage 67 est vissée, la tête 68 et la mâchoire 65 s'appuient respectivement, par l'intermédiaire des rondelles, sur les brides 82 et 81 et amènent celles-ci en butée sur les épaulements du galet 80. Les brides et le galet sont ainsi immobilisés, en même temps que les mâchoires, par rapport aux profilés 55 et 61. De plus, les brides 81 et 82 s'appuient sur la tige de brûleur 90, selon des génératrices de celle-ci situées respectivement plus bas et plus haut que l'axe 97, et au-delà de celui-ci par rapport à l'axe A de la tige de serrage 67. La tige est donc sollicitée vers ce dernier axe et vient en appui contre le galet 80 en se logeant tangentiellement dans la gorge 85, dont le rayon de courbure est égal au rayon de la tige 90. La coopération des lèvres 84 et du galet 80 assure une fixation très stable de la tige 90 et par conséquent du brûleur 91. Lorsque la tige de serrage 67 est légèrement desserrée, la tige de brûleur 90 peut être déplacée axialement en étant guidée entre les lèvres 84 et le galet. La tige 90 peut ainsi être introduite axialement dans son logement et poussée jusqu'à ce que son extrémité amont vienne en liaison avec le circuit d'alimentation en gaz combustible, comme décrit ci-après. La tige 90 peut inversement être extraite pour l'élimination du brûleur ou son remplacement par un autre brûleur de puissance différente. Dans la même position de la tige de serrage, la pince 79, le galet 20 et le brûleur 91 peuvent pivoter autour de l'axe A de la tige 67 de façon à orienter à volonté l'axe du brûleur. La mâchoire 65 et la bride 81 peuvent être munies de moyens d'indexation non représentés permettant d'orienter le brûleur dans plusieurs directions prédéfinies. L'axe 97 du brûleur, perpendiculaire à l'axe A de la tige de serrage, reste parallèle au plan P1, qui est avantageusement incliné d'environ 30° par rapport à la verticale, ce plan étant sensiblement parallèle au plan des bras 51 et 52 de la partie 2 du châssis. Dans la position de travail de cette dernière, l'axe de chaque brûleur peut être orienté vers l'arrière et vers le bas, et ceci soit dans un plan vertical longitudinal, soit vers la gauche ou vers la droite. Une orientation à environ 45° par rapport à la direction de déplacement permet généralement, avec un écartement mutuel approprié des brûleurs en fonction de l'intensité de la flamme, d'obtenir un rideau de flamme sensiblement continu et homogène.

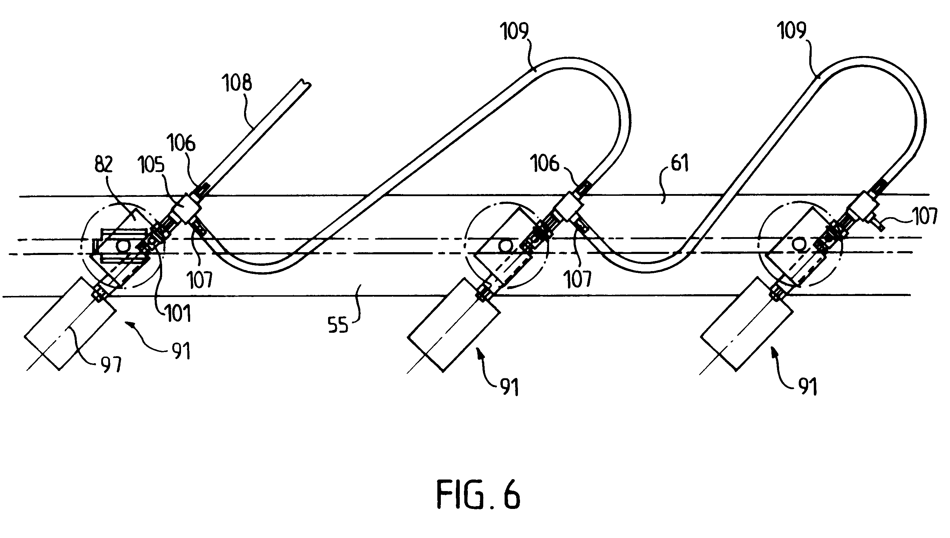

L'extrémité amont de la tige de brûleur 90 est munie d'un élément mâle 100 formant avec un élément femelle 101 un raccord rapide pour l'alimentation en gaz du brûleur. L'élément femelle 101 comporte de façon connue un clapet qui ferme automatiquement la sortie de gaz lorsque l'élément mâle est retiré. L'élément femelle 101 traverse un trou circulaire ménagé dans la région dorsale 102 de la pince 79, et comporte une collerette 103 qui s'appuie sur la face interne de la région 102 sous l'action d'un écrou 104 vissé extérieurement sur l'élément 101 pour fixer ce dernier au support de brûleur. L'élément femelle 101 est par ailleurs solidaire d'un bloc d'arrivée de gaz 105, illustré à la figure 6 qui montre trois brûleurs 91 montés sur les profilés 55 et 61. Le bloc 105 est en outre muni de deux embouts mâles 106 et 107, l'embout 106 étant disposé selon l'axe 97 du brûleur et l'embout 107 étant disposé radialement par rapport à cet axe. Les embouts 106 et 107 sont destinés respectivement à l'arrivée de gaz au bloc 105 et au départ de gaz de celui-ci. L'embout 106 du premier brûleur à gauche de la figure 6 reçoit l'extrémité aval d'une conduite flexible d'arrivée 108 dont l'extrémité amont est reliée à un détendeur. L'embout 106 de chacun des autres brûleurs reçoit l'extrémité aval d'une conduite flexible 109 de transmission de gaz dont l'extrémité amont est montée sur l'embout de sortie 107 du brûleur immédiatement voisin vers la gauche. Chacun des blocs 105 est par ailleurs en communication gazeuse directe avec l'élément femelle 101 correspondant. Ainsi, chaque brûleur est alimenté en gaz par la conduite 108 et par l'embout 105 et l'élément 101 associés à ce brûleur, par l'intermédiaire le cas échéant de conduites de transmission 109 et d'autres blocs 105. Les embouts 106 et 107 sont représentés à la figure 6, pour plus de clarté, comme ayant tous leurs axes dans un même plan. Avantageusement cependant, les embouts 107 s'étendent perpendiculairement au plan contenant les embouts 106, c'est-à-dire parallèlement aux axes des tiges de serrage 67, et vers le haut, de sorte que les conduites de transmission 109 prennent une configuration analogue à des portions d'hélice, dont la courbure s'adapte à la distance entre les brûleurs. Cette distance, représentée par l'entraxe entre les tiges de serrage, peut varier entre un minimum de l'ordre de 75 mm, correspondant à une disposition contiguë des unités de production de flammes, et un maximum qui dépend de la longueur des conduites de transmission et qui peut atteindre 750 mm. L'embout 107 de l'unité de production de flamme située le plus à droite de la figure 6 peut recevoir une conduite de transmission 109 non représentée alimentant d'autres unités également non représentées. Un embout de départ 107 qui n'est pas relié à une conduite 109 reçoit, ou est remplacé par, un bouchon. En fonction du nombre de brûleurs alignés sur une même barre, il peut être prévu plusieurs conduites d'arrivée telles que 108 alimentant chacune un sous-ensemble de ces brûleurs, et associées à autant de détendeurs.

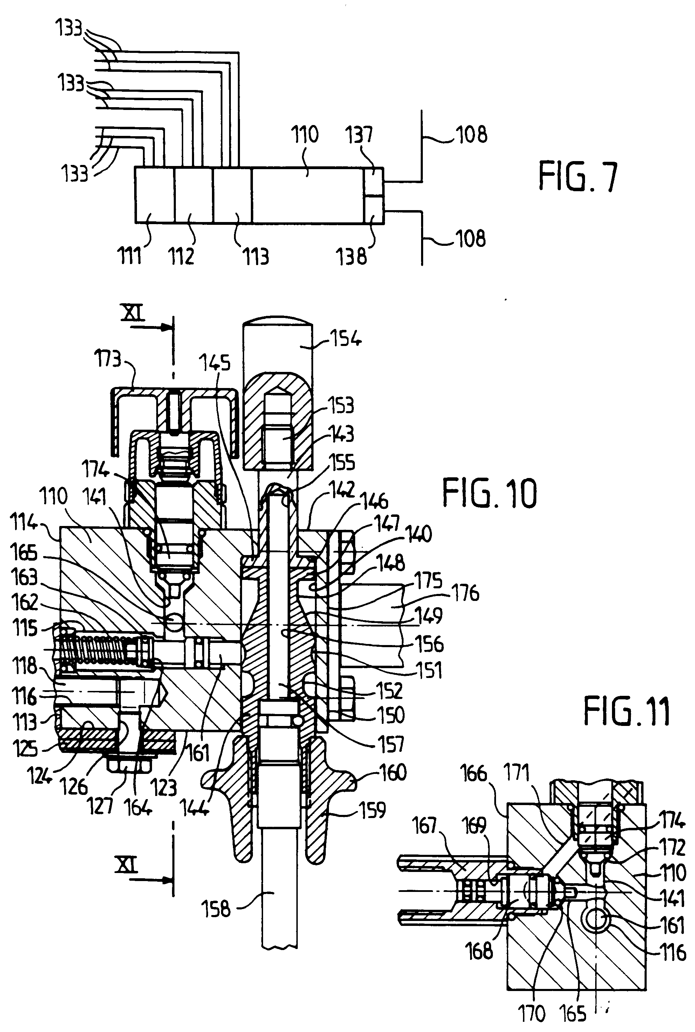

Les figures 7 à 11 représentent un bloc de distribution de gaz compact destiné à un désherbeur analogue à celui illustré aux figures 1 et 2, mais comportant des emplacements pour trois rangées de trois réservoirs de propane, soit neuf réservoirs au total. Ce bloc, illustré schématiquement à la figure 7, comprend un corps allongé 110 en une seule pièce à une extrémité duquel sont empilés trois éléments collecteurs 111, 112 et 113 reliés chacun à trois conduites flexibles amont 133, et qui porte à son autre extrémité deux détendeurs 137 et 138 d'où partent respectivement deux conduites flexibles aval 139. Comme on le voit aux figures 8 et 10, le corps 110 présente une face d'extrémité 114 plane et perpendiculaire à sa direction longitudinale, dans laquelle débouchent un alésage d'entrée de gaz 115 et un alésage borgne fileté 116 dont les axes sont parallèles à cette direction longitudinale. Les éléments collecteurs 111-113, identiques entre eux, ont chacun la forme d'un prisme droit ayant pour base un hexagone régulier, la hauteur du prisme étant à peu près égale au côté de l'hexagone. A l'état assemblé, ces éléments sont empilés sur la face 114 du corps avec leurs faces latérales alignées pour former un prisme hexagonal de hauteur triple de celle de chaque élément. A cet effet, chacun de ceux-ci présente un alésage axial traversant 117 aligné avec l'alésage 116 du corps, pour le passage de la tige axiale d'une vis d'assemblage 118 qui se visse dans le trou 116, la tête 119 de cette vis appliquant contre la face d'extrémité de l'empilement une plaque d'extrémité 120 ayant également la forme d'un prisme droit hexagonal. Chaque élément collecteur présente en outre un second alésage axial traversant 121, aligné avec l'alésage d'entrée 115 du corps. Le bon alignement des alésages 121 et de l'alésage 115 est assuré d'une part par la tige de la vis 118, d'autre part par la fixation de l'une 122 des faces latérales de chaque élément collecteur, et d'une face 123 du corps située dans le même plan que les faces 122, sur une surface plane 124 appartenant au châssis de l'appareil, par exemple la face supérieure d'une plaque support 125 liée de façon rigide à la bande 28. Les éléments collecteurs et le corps 110 présentent chacun un trou fileté 126 dont l'axe est perpendiculaire à sa face d'appui sur la surface 124 et qui débouche dans celle-ci et dans l'alésage 116 ou 117. Ce trou fileté reçoit une vis de fixation 127 qui traverse la plaque support 125. Les axes des alésages 126 se trouvent dans le plan P3 (plan de coupe des figures 8 et 10) défini par les axes des alésages 116-117 et 115-121, ce plan constituant un plan de symétrie pour chaque élément collecteur. Le premier de ces deux axes est décalé vers la face 122, et le second dans le sens opposé, par rapport à l'axe central des prismes hexagonaux.

Chaque élément collecteur présente un alésage taraudé 128, de même axe que le trou 126, ménagé à partir de la face 129 opposée à la face 122, communiquant avec l'alésage axial 121 et n'atteignant pas l'alésage 117. Deux alésages 130 semblables à l'alésage 128 sont ménagés à partir des deux faces latérales 131 adjacentes à la face 129. Les alésages 130 communiquent avec l'alésage 128, à distance desdites faces, pour former une cavité interne de chaque élément collecteur, constituant un élargissement local de la conduite formée par l'alignement des alésages 121, cette conduite étant obturée par la plaque 120 à l'opposé du corps 110. Dans chacun des alésages 128, 130 est vissé un embout 132 sur lequel est montée l'extrémité aval de l'une des conduites flexibles 133. Les extrémités amont des trois conduites 133 reliées à un même élément collecteur 111, 112 ou 113, sont montées de façon classique à la sortie des robinets des trois réservoirs d'une même rangée respectivement. La pression du gaz arrivant par chaque conduite 133 repousse un piston 134 logé axialement dans l'alésage de l'embout 132, en comprimant un ressort hélicoïdal 135 qui s'appuie sur le fond de l'alésage 128, 130. En l'absence de pression, le ressort 135 repousse le piston 134 vers l'extérieur en comprimant un joint torique d'étanchéité 136 entre un épaulement du piston et un épaulement interne de l'embout 132. Ceci empêche le gaz provenant des autres conduites 133 de remonter dans celle qui n'est pas sous pression, notamment lorsque son extrémité amont n'est pas reliée à un réservoir. Des joints toriques d'étanchéité sont également prévus, de façon classique, dans des logements définis par des épaulements des alésage 128-130 d'une part et des alésages 115-121 d'autre part, les premiers logements étant adjacents aux faces 129-131 et les seconds à la face d'extrémité 114 du corps 110 et aux faces des éléments 111-113 tournées à l'opposé de celui-ci.

On voit immédiatement qu'on peut réaliser un bloc de distribution pour un appareil à deux rangées ou une rangée de réservoirs à partir des mêmes composants que le bloc des figures 7 à 10, en supprimant un ou deux des éléments collecteurs et en remplaçant la vis 118 par une vis plus courte.

L'alésage d'entrée 116 du corps 110, d'axe horizontal, débouche, à l'opposé de la face 114, dans un alésage traversant 140 d'axe vertical, tandis qu'un autre alésage 141 d'axe vertical débouche à son extrémité inférieure dans l'alésage 116 et à son extrémité supérieure dans la face supérieure 142, plane et horizontale, du corps. Les termes horizontal et vertical sont valables dans l'orientation du bloc telle qu'illustrée sur les dessins, qui peut être modifiée si on le souhaite. L'alésage 140 reçoit un piston supérieur 143 et un piston inférieur 144, pouvant coulisser indépendamment l'un de l'autre et venir en contact mutuel par leurs faces d'extrémité. L'alésage 140 présente une courte partie supérieure de plus petit diamètre, dans laquelle coulisse la tige du piston 143, séparée de la partie restante, dans laquelle coulisse une collerette 145 de ce piston, par un épaulement 146 limitant vers le haut la course de celui-ci. Le piston 144 comprend, de haut en bas, une collerette 147 suivie d'une région cylindrique 148 de diamètre réduit qui se raccorde, par une région tronconique 149, à une région cylindrique 150 de plus grand diamètre dans laquelle sont ménagées deux gorges annulaires 151 et 152 de profil arrondi, la gorge inférieure 152 étant plus profonde que la gorge supérieure 151. La collerette 147 et la région 150 sont guidées dans la région de plus grand diamètre de l'alésage 140. L'extrémité supérieure filetée 153 du piston supérieur 143, faisant saillie au-dessus de la face 142, est vissée dans un alésage borgne taraudé d'un poussoir 154 de forme générale cylindrique de révolution, ayant le même axe que les pistons et l'alésage 140. Le poussoir 154 est ainsi solidaire du piston 143. Les pistons 143 et 144 présentent chacun un alésage axial, 155, 156, l'alésage 155 du piston 143 étant borgne et débouchant vers le bas, tandis que l'alésage 156 est traversant. Ces deux alésages reçoivent, avec un jeu juste suffisant pour permettre son coulissement, la région d'extrémité 157 d'un câble de transmission de mouvement relié à un organe de commande dans le poste de conduite du tracteur. Ce câble est entouré et guidé, de façon connue, par une gaine 158 dont l'extrémité libre est immobilisée dans une région inférieure élargie de l'alésage 156. Le câble et la gaine partent ainsi du piston 144 verticalement et vers le bas pour rejoindre le poste de conduite. Une douille 159 munie d'une collerette 160 et traversée axialement par la gaine 158 est vissée sur l'extrémité inférieure filetée du piston 144, au-dessous du corps 110.

Un piston 161 est guidé de façon étanche au gaz dans la région de l'alésage 116 comprise entre les alésages 140 et 141, et se prolonge avec jeu dans la région de ce même alésage comprise entre l'alésage 141 et la face 114. Un ressort hélicoïdal 162, prenant appui sur la face de l'élément collecteur 113 appliquée contre la face 114 du corps, sollicite l'extrémité bombée du piston 161 contre le piston 144. Dans la position limite supérieure de ce dernier, montrée à la figure 10, dans laquelle il applique la collerette 145 du piston 143 contre l'épaulement 146 de l'alésage 140, l'extrémité bombée du piston 161 vient se loger dans la gorge 151, et un joint torique d'étanchéité 163 disposé dans une gorge périphérique du piston 161 est maintenu éloigné d'un épaulement incliné 164 de l'alésage 116, permettant l'accès du gaz provenant des éléments collecteurs dans l'alésage 141. Lorsque le piston 144 est abaissé, l'extrémité du piston 161 pénètre, sous l'action du ressort 162, dans l'espace annulaire compris entre la collerette 147 et la rampe tronconique 149, et le joint 163 vient s'appuyer sur l'épaulement 164, interrompant l'arrivée du gaz. Le mouvement vers le bas du piston 144 est limité par la venue en butée de la collerette 147 sur le piston 161.

Un alésage 165 s'étend horizontalement, et perpendiculairement à l'alésage 116, entre l'alésage 141 et une face 166 du corps 110, et reçoit dans une région taraudée un raccord 167 faisant saillie sur cette face et relié au circuit hydraulique du tracteur 3 de façon à être alimenté en huile sous pression en même temps que le vérin 205. Un piston 168 est guidé dans un alésage traversant 169 du raccord 167, coaxial à l'alésage 165, de façon à venir en contact étanche avec un épaulement oblique 170 de ce dernier, par l'intermédiaire d'un joint torique, sous l'effet de la pression de l'huile, et au contraire à s'éloigner de cet épaulement, en l'absence de pression d'huile, sous l'effet de la pression du gaz. Les alésages 141 et 165 sont reliés entre eux par un alésage 171 dont l'axe s'étend obliquement dans le plan des axes des deux précédents. Le siège tronconique 170 est interposé entre les zones de jonction de l'alésage 165 avec les alésages 141 et 171, et un siège tronconique 172 est interposé, dans l'alésage 141, entre ses zones de jonction avec les alésages 165 et 171. Le siège 172 appartient à un dispositif de réglage de veilleuse connu en lui-même comprenant notamment un bouton de manoeuvre rotatif 173 et un obturateur coulissant 174 définissant avec le siège 172 un passage étranglé de section variable. Le bouton 173 et l'obturateur 174 sont coaxiaux à l'alésage 141, le bouton 173 étant immédiatement voisin du poussoir 154. Un dernier alésage non visible sur les figures, parallèle l'alésage 116, s'étend entre la zone de jonction des alésages 165 et 171 et la face 175 du corps 110 opposée à la face 114, et communique avec un raccord 176 sur lequel sont montés les deux détendeurs 137 et 138.

Le bloc de distribution décrit fonctionne de la façon suivante. Comme indiqué plus haut, lorsque le piston 144 est abaissé, le circuit de gaz provenant des réservoirs à travers les conduites 133 et les éléments collecteurs 111-113 est interrompu par le contact entre le joint 163 et le siège 164. Le piston 143 et le poussoir 154, sous l'effet de leur poids, sont également en position basse. Une traction sur le poussoir 154 entraîne vers le haut le piston 153, mais n'a aucune action sur le piston 144. De même, la manoeuvre du câble 157 ne peut que soulever le piston 143 et le poussoir 154. Pour soulever le piston 144 et ouvrir le circuit de gaz, il est nécessaire de pousser vers le haut la douille 159, moins accessible que le poussoir 154, ce qui ne peut résulter que d'un geste volontaire. Pour fermer le gaz, il suffit d'appuyer vers le bas sur le poussoir 154, qui est bien visible et accessible aussi bien depuis les côtés que depuis l'arrière du châssis. De même, depuis le poste de conduite du tracteur, une poussée sur le câble pour le faire sortir de la gaine 158 l'amène en butée sur le fond de l'alésage 155, ce qui tend à écarter l'un de l'autre les pistons 143 et 144 et par conséquent à abaisser ce dernier. Dans sa position basse, la gorge 152 se trouve immédiatement au-dessous de la face 123 du corps. Il est alors possible d'engager l'anse d'un cadenas dans cette gorge, l'anse étant emprisonnée entre le fond de la gorge et une cheville non représentée faisant saillie par rapport à la face 123. Le cadenas assure alors un verrouillage du robinet en position fermée. Lorsque le robinet est ouvert, le gaz parvient dans les alésages 141 et 165. Si le raccord 167 ne reçoit pas la pression hydraulique, ce qui correspond à la position de travail abaissée des brûleurs, le gaz peut passer entre le siège 170 de l'alésage 165 et le piston 168 et parvenir ainsi, au débit normal, à l'alésage de sortie et au raccord 176, et par conséquent aux brûleurs par l'intermédiaire des détendeurs 137 et 138 et des conduites 108. Dans le cas contraire, c'est-à-dire si les brûleurs sont relevés, le passage direct par l'alésage 165 est interrompu et le gaz doit emprunter le passage étranglé entre le siège 172 de l'alésage 141 et l'obturateur 174 pour rejoindre l'alésage de sortie par l'intermédiaire de l'alésage oblique 171, les brûleurs étant alors alimentés à débit réduit pour produire une flamme de veilleuse, qui réduit la consommation de gaz lors des manoeuvres entre deux bandes de terrain à traiter.

Bien entendu, selon les cas, le bloc de distribution peut comprendre un nombre de détendeurs différent de deux, par exemple un ou trois. Le dispositif d'actionnement du robinet d'arrêt, dont les éléments se déplacent en translation de façon coaxiale, est particulièrement robuste.

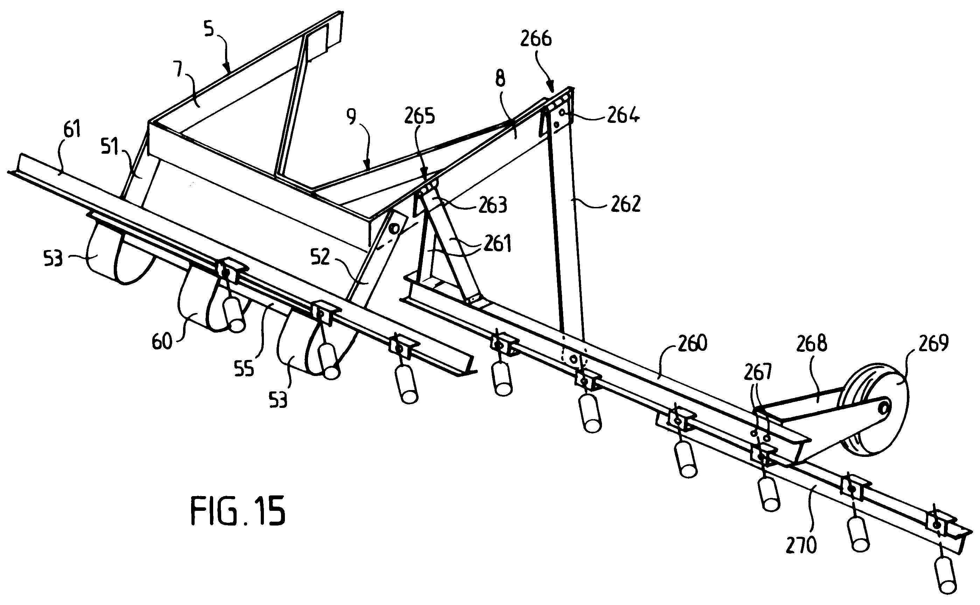

L'accessoire d'extension arrière représenté aux figures 13 et 14 est destiné en particulier au traitement du sol le long de rangées de plantes séparées par des intervalles importants, notamment de rangées de vignes ou d'arbres fruitiers. Cet accessoire comprend une structure rigide composée d'un tube d'acier 220 et de trois profilés 221, 222 et 223 de même section que les profilés 55 et 61. Les âmes de ces profilés sont engagées et immobilisées par soudage dans des fentes 224 ménagées obliquement dans la paroi du tube, la direction longitudinale de ces profilés s'étendant perpendiculairement à l'axe du tube. Le profilé 221, de très faible longueur, est fixé, au moyen d'un support de brûleur semblable à celui décrit précédemment, au second profilé 61, qui fait saillie vers la gauche du châssis au-delà du profilé 55, de façon à se situer dans le prolongement de ce dernier. L'orientation des fentes 224 est telle que, dans la position de travail abaissée de la partie mobile du châssis, comme représenté à la figure 14, le tube 220 s'étende sensiblement horizontalement vers l'arrière. Les profilés 221, 222 et 223 font saillie vers la droite à partir du tube 220, le profilé 222, situé sensiblement à mi-longueur de ce dernier, et le profilé 223 situé à son extrémité arrière, pouvant avoir une longueur un peu plus grande que le profilé 221. A la figure 15, trois brûleurs 91-1, 91-2 et 91-3 sont montés respectivement sur le support de brûleur servant à assembler les profilés 61 et 221, et sur des supports semblables fixés sur les profilés 222 et 223. Ces trois brûleurs sont orientés vers la gauche afin de projeter leur flamme le long d'une rangée de plantes s'étendant sur le côté gauche de l'appareil. Ces trois brûleurs additionnent leurs effets et permettent de travailler trois fois plus vite qu'en l'absence de l'accessoire. Cet accessoire est représenté à la figure 13 à la fois en position rétractée et en position d'extension. Dans la première position, les profilés 55 et 221 sont bout à bout et, grâce à la faible longueur de ce dernier, l'encombrement en largeur du châssis n'est pratiquement pas augmentée par l'accessoire. Dans la position d'extension, le profilé 221 est éloigné du profilé 55. La position de l'accessoire peut être réglée par le coulissement du profilé 61. Bien entendu, il est possible de prévoir deux accessoires d'extension arrière, respectivement gauche et droit, symétriques l'un de l'autre par rapport au plan longitudinal médian du châssis de l'appareil et pouvant être fixés sur deux profilés tels que le profilé 61, placés dans le prolongement l'un de l'autre et dont la longueur totale correspond à peu près à la longueur du profilé 55, de façon que les deux accessoires puissent être placés simultanément en position rétractée.

Un accessoire gauche et un accessoire droit peuvent être reliés entre eux par un profilé complémentaire s'étendant latéralement de l'un à l'autre, relié aux profilés 222, ou aux profilés 223, des deux accessoires de la même façon que le profilé 61 est fixé sur le profilé 55. Ce profilé complémentaire peut servir à améliorer la rigidité de l'ensemble, et/ou à recevoir des unités de production de flamme et/ou des outils pour le traitement mécanique du sol. La seconde rangée d'unités de production de flamme qui peut être ainsi réalisée permet d'accélérer le traitement. Ces deux dernières utilisations sont indépendantes de l'application viticole de l'accessoire.

L'accessoire d'extension latérale montré à la figure 15 est destiné à augmenter la largeur sur laquelle peuvent être répartis les brûleurs, pour une utilisation optimale de ceux-ci, lorsque leur écartement mutuel doit être important, notamment dans la grande culture sarclée et la culture céréalière. Cet accessoire comprend un profilé 260 d'une longueur supérieure à 3 m, qui pour une meilleure rigidité est de préférence du type IPN précité. Ce profilé est fixé par des éléments de liaison respectifs 261, 262 aux ailes 263, 264 de deux charnières 265, 266, l'autre aile de chaque charnière étant fixée sur la branche de droite 8 de la bande 5 du châssis de l'appareil, les deux charnières étant décalées l'une par rapport à l'autre le long de cette branche et ayant un même axe de pivotement horizontal. Les deux charnières permettent au profilé 260 de pivoter autour de leur axe de façon que son propre axe reste dans un plan perpendiculaire à celui-ci. Dans l'orientation horizontale du profilé 260, les plans de l'âme et des ailes de celui-ci sont parallèles à ceux des âmes et des ailes des profilés 55 et 61, l'aile inférieure du profilé 260 étant sensiblement à la même hauteur que l'aile du profilé 61. Au voisinage de l'extrémité libre du profilé 260, son âme est percée de trous 267 pour le boulonnage d'une chape 268 dans laquelle pivote une roue 269 destinée à rouler sur le sol. Le profilé 260 reçoit, sur son aile inférieure, des supports de brûleurs semblables à ceux montés sur les profilés 55 et 61. De plus, un profilé supplémentaire en T 270 est relié à l'aile inférieure du profilé 260 par des supports de brûleurs de façon à étendre la largeur de travail au-delà de l'extrémité libre de ce dernier. Le pivotement du profilé 260 autour de l'axe des charnières permet à la roue 269 de suivre la surface du sol, notamment lorsque le tracteur s'incline latéralement par suite des irrégularités de celui-ci, et permet également de relever le profilé sensiblement à la verticale pour limiter l'encombrement en largeur du dispositif entre deux phases d'utilisation. Bien entendu, on peut prévoir également un accessoire d'extension gauche fixé sur la branche 7 du châssis. A titre d'exemple, deux accessoires d'extension comportant chacun un profilé 260 d'une longueur utile de 3 m au-delà duquel un profilé 270 fait saillie sur une longueur de 1 m, montés de part et d'autre d'un châssis dont la barre porte-brûleurs a une longueur utile de 2 m, fournissent une largeur de travail de 10 m.

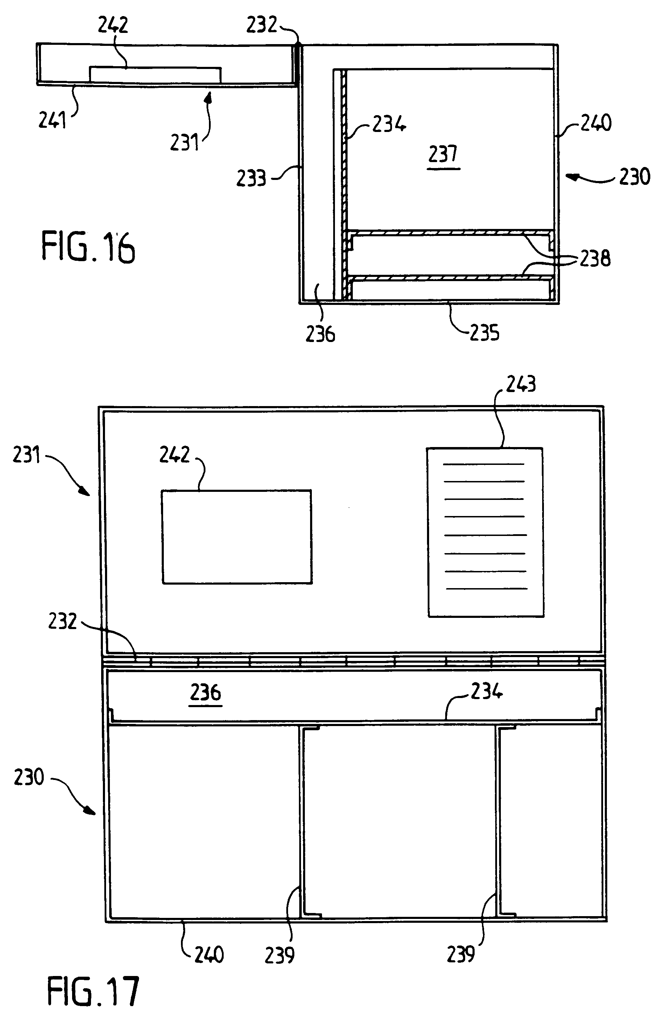

Les figures 16 et 17 montrent un coffret en tôle qui peut être placé sur le châssis de l'appareil, composé d'un bac parallélépipédique 230 et d'un couvercle 231 articulé par une charnière 232 sur le bord supérieur d'une paroi 233 du bac. Une cloison en tôle 234 parallèle à la paroi 233 délimite dans le bac 230, à partir du fond 235 de celui-ci, un compartiment relativement étroit 236, adjacent à la paroi 233 sur toute la longueur de celle-ci. L'espace restant 237 est destiné à recevoir le jeu de brûleurs fourni avec l'appareil. Deux tôles horizontales superposées 238 s'étendent sur toute la surface de l'espace 237, et sont percées de trous circulaires non représentés permettant de loger chacun la tuyère 96 d'un brûleur. L'espace 237 est subdivisé, au-dessus des tôles 238, par deux cloisons transversales 239, s'étendant chacune entre la cloison 234 et la paroi 240 du bac opposée à la paroi 233, délimitant ainsi trois sous-espaces dans lesquels sont logés des brûleurs de diamètres différents et de puissances différentes. A titre d'exemple, il est prévu de fournir cinq brûleurs de faible puissance, cinq brûleurs de puissance moyenne et trois brûleurs de forte puissance, pour chaque rangée de trois réservoirs pouvant être montés sur le châssis, soit 10 + 10 + 6 brûleurs pour le dispositif à deux rangées illustré aux figures 1 et 2. Le couvercle 231 présente une paroi plane 241, horizontale aussi bien en position fermée qu'en position ouverte, par un pivotement de 180° autour de la charnière 232. Une calculatrice 242 est fixée sur la face interne de la paroi 241, tournée vers le haut en position ouverte, et la figure 17 montre un bloc 243 de feuilles préimprimées posé à côté de la calculatrice. La calculatrice 242 est programmée de façon à aider l'utilisateur dans le choix des paramètres de réglage de l'appareil pour un traitement donné, et chaque feuille du bloc 243 sert à consigner par écrit les caractéristiques d'un traitement. Le bloc 243 peut être placé, lorsqu'il n'est pas utilisé, dans le compartiment 236, lequel peut également recevoir divers outils.

Le châssis du dispositif selon l'invention peut être monté non pas à l'arrière du tracteur comme décrit précédemment, mais à l'avant de celui-ci, notamment lorsque ce dernier possède à l'avant des moyens de fixation appropriés, ce qui permet au conducteur de surveiller plus facilement le fonctionnement. Il est également possible de répartir les constituants du dispositif sur deux châssis montés respectivement à l'avant et à l'arrière, réalisant ainsi un équilibrage des charges. Dans certaines circonstances, il est intéressant de disposer de deux rampes de brûleurs respectivement à l'avant et à l'arrière. C'est le cas notamment pour les traitements de défanage, la vapeur d'eau extraite des plantes par la première rampe ayant le temps de se dissiper dans l'atmosphère avant le passage de la seconde rampe et ne nuisant donc pas à l'efficacité des flammes produites par celle-ci.

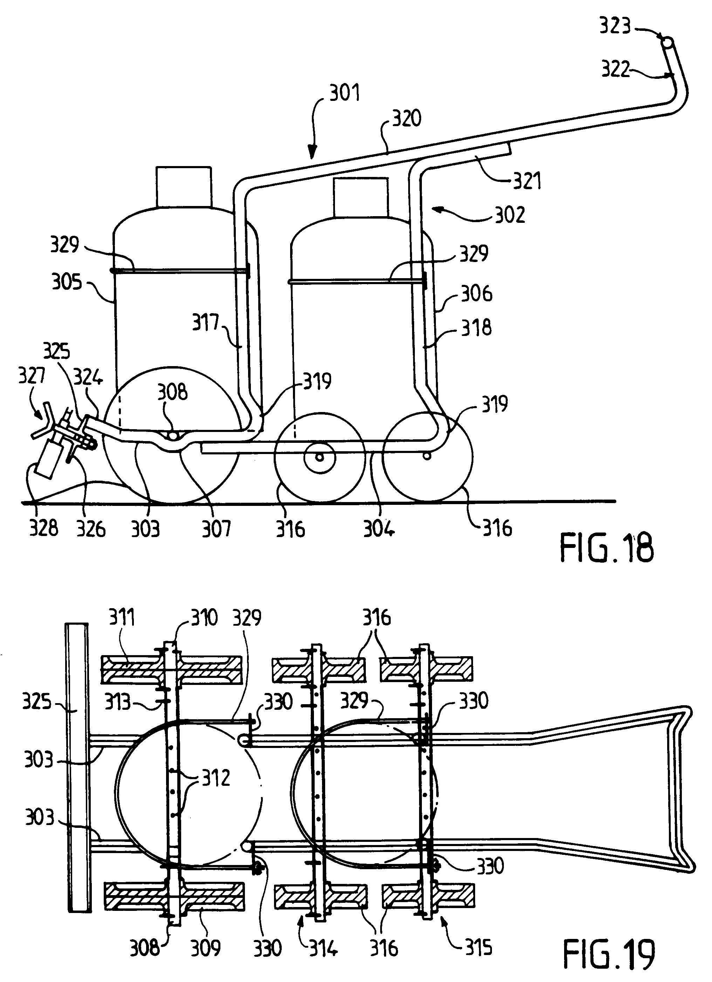

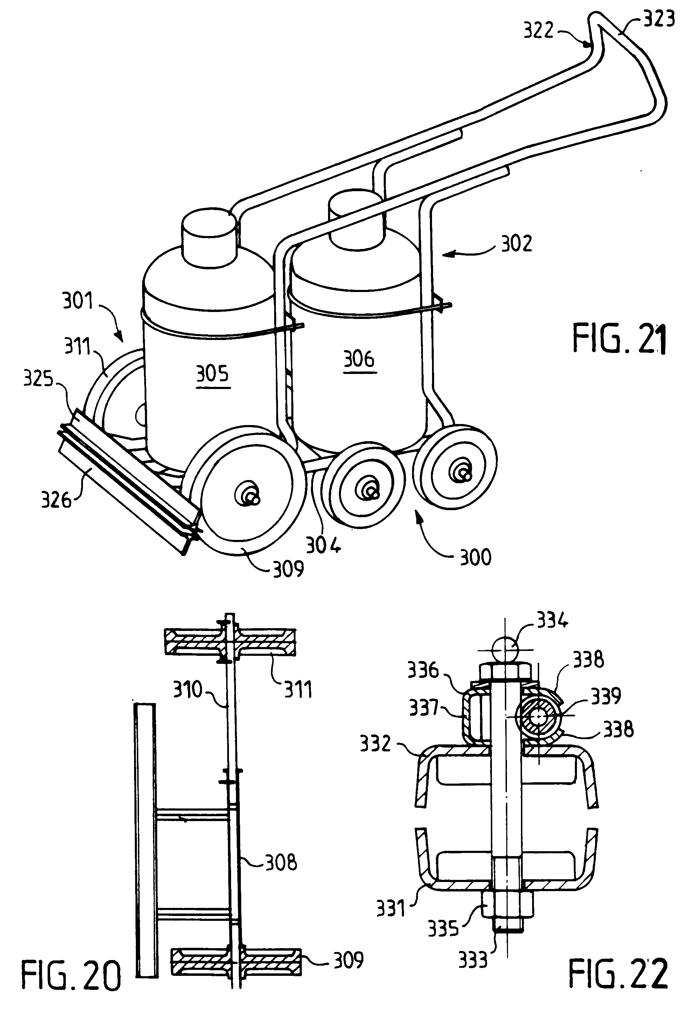

Le désherbeur illustré aux figures 18 à 21 comprend un chariot principal 301 et un chariot auxiliaire 302, pouvant être mutuellement assemblés pour former un chariot composé 300. Chacun des chariots 301 et 302 comporte un châssis à base de tubes d'acier formant deux longerons s'étendant sensiblement horizontalement selon une même direction longitudinale, à savoir des longerons gauche et droit 303 pour le chariot principal 301 et des longerons gauche et droit 304 pour le chariot auxiliaire 302. Les deux longerons 303 et les deux longerons 304 présentent un même écartement mutuel, cet écartement et la longueur des deux paires de longerons étant suffisants pour offrir un appui stable à des réservoirs respectifs de 13 kg de propane liquéfié sous pression. Les longerons 303 sont déviés localement vers le bas en 307, sensiblement à mi-longueur, pour loger, au-dessous du réservoir 305, la section transversale d'un tube 308 s'étendant horizontalement et perpendiculairement à la direction longitudinale. Le tube 308 est soudé sur les longerons 303 et se prolonge au-delà du diamètre du réservoir 305 vers la gauche et vers la droite. Une roue gauche 309 est montée de façon à tourner librement autour du tube 308. Un autre tube 310 est guidé en coulissement à l'intérieur du tube 308, et porte à son extrémité droite, faisant saillie hors de ce dernier, une roue 311. Les parois des tubes 308 et 310 sont traversées, verticalement de haut en bas, par plusieurs trous 312 alignés selon leur axe. Une goupille en épingle 313 s'engage dans des trous de chacun des deux tubes et permet de fixer le tube 310 en une position réglable, le long de son axe, par rapport au tube 308, et de régler ainsi l'écartement mutuel des roues de façon à assurer une stabilité maximale du chariot en fonction de la largeur disponible pour sa circulation. Les figures 19 et 20 illustrent respectivement les écartements minimal et maximal, qui sont par exemple de 50 et 75 cm. Un essieu avant 314 et un essieu arrière 315 du chariot auxiliaire, semblables par leur construction à l'essieu formé par les tubes 308 et 310 et les roues 309 et 311, sont montés de la même façon sur les longerons 304, à ceci près que les tubes extérieurs des essieux sont fixés sur les génératrices inférieures des longerons, lesquels restent rectilignes, et que les roues 316 ont un diamètre plus petit que celui des roues 309 et 311. A chacun des longerons 303, 304 se raccorde un montant 317, 318 s'élevant verticalement dans le plan vertical du longeron. Pour permettre aux réservoirs de s'appuyer par leurs génératrices sur les montants, les longerons se prolongent vers l'arrière quelque peu au-delà de l'aplomb des montants et se raccordent à ces derniers par des doubles coudes 319 comprenant un coude inférieur dont la concavité est tournée vers l'avant et un coude supérieur dont la concavité est tournée vers l'arrière. Chaque montant, à son extrémité supérieure, se raccorde, par l'intermédiaire d'un coude, à une barre 320, 321 s'élevant obliquement vers l'arrière sous un faible angle par rapport à l'horizontale, cet angle étant le même pour les barres 320 du chariot 301 et pour les barres 321 du chariot 302. Les deux barres 320 sont réunies à leur extrémité arrière par une poignée transversale 322 en forme de U comportant une barre rectiligne 323 parallèle aux essieux. Les longerons 303, les montants 317, les barres 320 et la poignée 322 du chariot 301 sont formés par un seul tube coudé. Les deux régions d'extrémité 324 de ce tube, prolongeant vers l'avant les longerons 303, sont légèrement relevées par rapport à l'horizontale, et soudées par leurs tranches à l'âme d'un profilé en T 325 dont l'aile est tournée vers le bas. Ce profilé, un autre profilé identique 326 et trois unités de production de flamme 327 analogues à celles décrites plus haut à l'aide des figures 3 à 6, alignées le long de ces profilés, sont reliés mutuellement de la même façon que les profilés 55 et 61 et lesdites unités. Compte tenu de l'inclinaison des régions d'extrémité 324 du châssis, et par suite des âmes et des ailes des profilés, les axes des brûleurs 328 des unités 327 sont légèrement inclinés vers l'avant.

Le châssis du chariot 302 comprend deux tubes coudés respectivement gauche et droit formant chacun un longeron 304, un montant 318 et une barre 321. Les longerons 304 sont plus longs que les longerons 303 et les barres 321 beaucoup plus courtes que les barres 320. Chacun des deux chariots comporte un arceau 329 fixé de façon amovible à ses deux extrémités à des pattes 330 solidaires des montants 317, 318, qui permettent de maintenir les réservoirs 305, 306 appliqués contre ces derniers. Le chariot principal 301, équipé de son réservoir 305, constitue un dispositif de traitement autonome. Les unités de production de flamme 327 sont reliées entre elles par des conduites flexibles telles que les conduites 109 de la figure 6, et reliées par une conduite telle que la conduite 108 à un détendeur monté sur le robinet de sortie du réservoir 305. Le chariot 301 peut également être couplé au chariot 302, les châssis de ces deux chariots étant mutuellement solidarisés, par exemple par des boulons, en deux zones de jonction inférieures avant et deux zones de jonction supérieures arrière. Dans chacune des zones de jonction avant, la région arrière d'un longeron 303 s'appuie sur la région avant d'un longeron 304, faisant saillie en avant des roues 316. Dans chacune des zones de jonction arrière, la région médiane d'une barre 320 s'appuie sur la longueur totale d'une barre 321. Le chariot composé ainsi réalisé peut recevoir soit l'un des réservoirs 305 et 306, soit ces deux réservoirs à la fois. Dans ce dernier cas, les sorties des deux réservoirs sont reliées par un coupleur classique sur lequel est monté le détendeur. Les deux réservoirs portés par le chariot composé permettent de traiter sans interruption une superficie plus grande que le réservoir unique porté par le chariot principal seul. Le couplage des deux chariots peut également servir, sans transporter deux réservoirs, à améliorer le roulement sur les terrains difficiles, grâce aux trois essieux. Le diamètre relativement grand des roues avant facilite le roulement en terrain meuble. Les quatre autres roues, qui n'ont qu'à suivre la trace des deux premières, peuvent être d'un diamètre plus petit, ce qui diminue leur coût et l'encombrement en longueur.

Si la résistance insuffisante du terrain et/ou les conditions climatiques défavorables ne permettent pas de travailler convenablement avec un ou deux réservoirs de 13 kg embarqués, il est possible de relier les brûleurs portés par le chariot principal ou par le chariot composé à un réservoir fixe de 35 kg, ou à deux réservoirs couplés fixes de 13 ou 35 kg, par l'intermédiaire d'une conduite flexible suffisamment longue, par exemple de 25 m. Il est alors avantageux de prévoir à la sortie du détendeur un raccordement mâle/femelle normalisé, qui peut être dissocié pour intercaler la conduite de grande longueur.

La configuration à six roues du chariot composé est particulièrement adaptée aux sols très accidentés, notamment après labour. Il est également possible de prévoir des roues jumelées, et/ou des chenillettes reliant les roues des différents essieux.

Les unités de production de flamme 327 remplissent exactement les mêmes fonctions que celles précédemment décrites, à l'exception de l'échange des brûleurs, ceux-ci étant d'un seul type pour cet appareil. Leur structure est donc quelque peu simplifiée, ce qui diminue leur coût de fabrication. Chacune d'elles comprend des mâchoires 331 et 332, une tige filetée 333, une poignée 334 et un écrou 335 identiques aux éléments 64, 65, 67, 69 et 70. La pince 79 est remplacée par une pince 336 d'une forme générale semblable, mais dont le dos 337 se trouve à l'opposé des lèvres recourbées 338 et n'est pas percé. Le galet 80 est supprimé et la tige 339 du brûleur s'appuie directement sur la tige de serrage 333 qui s'engage dans une gorge analogue à la gorge 85, ménagée sur la tige 339, immobilisant celle-ci en translation.

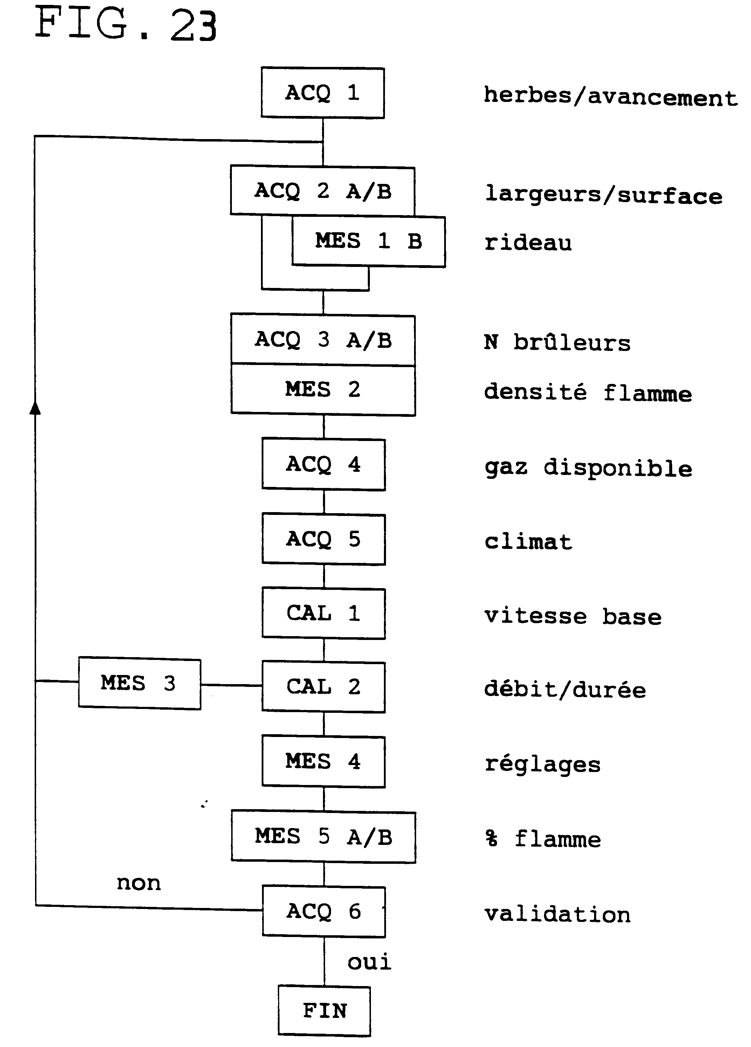

On décrit maintenant la figure 23, qui montre un exemple de schéma logique utilisable pour la programmation de la calculatrice 242. Dans ce schéma, les symboles littéraux apparaissant dans les rectangles représentant les étapes du traitement ont la signification suivante. ACQ désigne une étape d'acquisition de données, dans laquelle la calculatrice affiche un message demandant à l'utilisateur d'entrer des données, et enregistre les données entrées en réponse au message. MES indique une étape de calcul suivie de l'affichage d'un message d'information. CAL indique une étape de calcul non suivie d'un message. Le symbole A/B indique que les messages sont différents selon que le traitement a lieu en pré-levée ou en post-levée, c'est-à-dire avant ou après la sortie de terre des cultures à protéger, information recueillie lors de la première étape d'acquisition de données. La lettre B seule signale une étape d'affichage qui a lieu seulement dans le cas d'un traitement en post-levée.

Le programme utilise un certain nombre de constantes contenues en mémoire dans la calculatrice et relatives à l'équipement de l'appareil. Ces constantes peuvent comprendre : nombre de réservoirs pouvant être mis en place sur le châssis; valeurs de pressions stabilisées pouvant être fournies par le ou les détendeurs; nombre de brûleurs disponibles de chaque type, avec, pour chacun des types et chacune des valeurs de pression, les caractéristiques d'utilisation des brûleurs telles que débit, largeur de flamme et longueur de flamme. A titre d'exemple, les détendeurs comportent trois positions de travail correspondant respectivement à des pressions de 3, 2,2 et 1,5 bar, et l'équipement comprend six brûleurs de grande puissance, dix brûleurs de moyenne puissance et dix brûleurs de faible puissance, la combinaison des trois pressions et des trois types de brûleurs fournissant une gamme de neuf débits de gaz étagés de 3,2 à 0,4 kg/h.

A l'étape ACQ 1, l'utilisateur doit introduire trois données relatives à la nature des herbes à éliminer, et à l'état d'avancement de la croissance de celles-ci et des cultures à protéger. Les différentes herbes sont classées en catégories par résistances croissantes à la flamme. A chacune de ces catégories, ainsi qu'à différents stades de croissance, peuvent être associées des touches numériques à enfoncer sur le clavier de la calculatrice. Il convient d'indiquer de la même façon si le traitement a lieu en pré-levée ou en post-levée. L'étape ACQ 2 A/B correspond à l'introduction de données spécifiques des deux types de traitement. En pré-levée, on indique simplement la largeur de travail, c'est-à-dire la longueur de la barre sur laquelle seront répartis les brûleurs, ou encore la largeur de la bande de terrain qui sera traitée à chaque passage. En post-levée, on indique la largeur de chaque segment de flamme, celle de chaque segment sans flamme et le nombre de segments de flamme. Dans les deux cas, on indique en outre la superficie à traiter. Dans le cas d'un traitement en post-levée, l'étape MES 1 B correspond à l'affichage de données calculées à transcrire sur le bloc 243, à savoir la largeur de travail et le pourcentage de cette largeur occupée par la flamme. A l'étape ACQ 3 A/B, le programme suggère un nombre de brûleurs à utiliser et invite l'utilisateur à l'accepter ou à le modifier. En post-levée, le nombre suggéré correspond à deux brûleurs pour chaque segment de flamme si le nombre de brûleurs disponibles le permet, ou à défaut un brûleur par segment. En pré-levée, le nombre suggéré est calculé en fonction de la largeur de travail. A l'étape MES 2 est calculé et affiché l'écart moyen entre les brûleurs sur la barre, qui définit la densité de la flamme. Cette densité est qualifiée de faible si l'écart est supérieur à 20 cm et de forte s'il est inférieur à 6 cm. A l'étape ACQ 4, l'utilisateur est invité à indiquer le nombre de réservoirs de 13 kg et le nombre de réservoirs de 35 kg dont il dispose. Cette invitation est répétée avec un message d'erreur si la somme des deux nombres introduits est supérieur à la capacité du châssis. A l'étape ACQ 5, l'utilisateur introduit trois données relatives aux conditions climatiques, à savoir la température atmosphérique en °C, la vitesse du vent en km/h et un repère indiquant le degré d'humidité, par exemple le chiffre 1 si les herbes sont sèches, 2 en cas de rosée et 3 en cas de pluie. Ces trois données ont une influence sur la quantité de gaz nécessaire pour réaliser le traitement. De plus, la donnée température a une influence sur la capacité de soutirage des réservoirs, sur laquelle on reviendra plus loin. A l'étape CAL 1, le programme calcule, à partir des données acquises à l'étape ACQ 2 A/B, la quantité de gaz nécessaire pour le traitement envisagé dans des conditions optimales quant aux critères climatiques et aux caractéristiques des herbes, par exemple sur la base de 25 kg de gaz par hectare de sol effectivement touché par les flammes, puis corrige cette valeur optimale en tenant compte des données acquises en ACQ 1 et ACQ 5, puis en déduit, en tenant compte du nombre de brûleurs utilisés et en prenant comme base de calcul un débit unitaire arbitraire, une vitesse théorique du tracteur (vitesse de base) permettant de réaliser le traitement.

L'étape CAL 2 a pour objet de calculer, par itérations successives, la vitesse réelle de travail et par conséquent la durée du traitement, en tenant compte de la capacité de soutirage des réservoirs mentionnée ci-dessus. A cet effet, le programme utilise les relations, connues empiriquement dans la technique, entre le débit de gaz soutiré d'un réservoir et la durée pendant laquelle on peut utiliser ce réservoir, c'est-à-dire la durée pendant laquelle la pression du gaz à l'intérieur de celui-ci, qui diminue par suite du refroidissement provoqué par la vaporisation du gaz liquéfié, reste supérieure à la pression de travail du détendeur. En particulier, le programme peut utiliser des relations, contenues en mémoire, donnant le débit maximal de soutirage en fonction de la température ambiante, pour différentes durées d'utilisation, par exemple une demi-heure, deux heures et six heures. En tenant compte de l'assortiment de réservoirs disponible et du nombre de brûleurs sélectionné, le programme calcule d'abord le débit maximal disponible par brûleur à la température considérée, pendant une durée d'une demi-heure. La durée du traitement est alors calculée à partir de ce résultat et de données précédemment acquises ou calculées, à savoir largeur de travail, superficie à traiter et vitesse de base. Si cette durée est compatible avec l'hypothèse de durée d'utilisation des réservoirs (une demi-heure) le programme recherche la combinaison pression-type de brûleurs fournissant la puissance maximale compatible avec le débit maximal calculé, et les caractéristiques de flamme correspondantes sont utilisées dans les étapes suivantes. Si aucun couple pression-brûleurs ne convient, l'étape CAL 2 est répétée en sélectionnant une durée d'utilisation plus longue, soit deux heures, puis en cas de nouvel échec six heures. S'il n'est pas possible de déterminer des paramètres permettant le traitement souhaité en moins de six heures, un message est affiché (étape MES 3) indiquant à l'utilisateur qu'il doit augmenter la capacité totale des réservoirs, ou diminuer le nombre de brûleurs ou la surface à traiter, et le programme est répété à partir de l'étape ACQ 2 A/B, en proposant, pour chacune des données à introduire, la valeur sélectionnée lors de la précédente exécution de la même étape.

Lorsque le couple pression-type de brûleurs a été sélectionné à l'étape CAL 2, le programme en déduit la vitesse effective d'avance du tracteur, à partir de la vitesse de base, en substituant le cas échéant le débit réel de chaque brûleur à la valeur prise en compte pour le calcul de la vitesse de base. La nouvelle vitesse ainsi calculée est le cas échéant corrigée pour tenir compte des caractéristiques des herbes, si celles-ci n'ont pas été prises en compte précédemment, puis on en déduit la durée du traitement. A l'étape MES 4 sont affichées les informations suivantes, à transcrire sur le bloc 243 : nombre et référence des brûleurs, distance entre l'extrémité inférieure de ceux-ci et le sol (calculée en fonction de la longueur de flamme associée au couple pression-brûleurs, et à régler comme décrit ci-dessus en relation avec la figure 12), position de travail des détendeurs, vitesse d'avance, pourcentage de flamme. L'étape MES 5 A/B correspond à l'affichage de messages propres aux traitements en pré-levée et en post-levée. En pré-levée, le message préconise une inclinaison latérale des brûleurs, c'est-à-dire un angle entre l'axe de ceux-ci et la direction longitudinale de la barre, égal à 45°, et indique si le pourcentage de flamme calculé, c'est-à-dire le rapport entre la largeur du sol effectivement couverte par les flammes et la largeur de travail, atteint ou non 85%, valeur limite permettant d'obtenir un résultat optimal. En post-levée, le message indique si le pourcentage de flamme est inférieur ou supérieur à la valeur théorique affichée à l'étape MES 1 B et préconise une inclinaison également de 45° dans le premier cas et une inclinaison différente, correspondant à un redressement de l'axe des brûleurs et par conséquent à une diminution de l'étalement latéral des flammes, dans le second cas. A l'étape ACQ 6, le programme affiche la durée du traitement telle que calculée, en heures et minutes, ainsi que le coût en gaz de celui-ci, calculé sur la base d'un prix par kg contenu en mémoire, et demande à l'utilisateur si les conditions ainsi définies lui conviennent. Dans l'affirmative, le programme est terminé. Dans la négative, il reprend à l'étape ACQ 2 A/B, dans les mêmes conditions qu'après l'étape MES 3.

Pour rendre plus commode l'utilisation de la calculatrice, elle peut contenir en mémoire des valeurs par défaut des données à introduire au cours des étapes ACQ, qui sont proposées lors de la première exécution de ces étapes, l'utilisateur pouvant soit les valider, soit les modifier.

Par ailleurs, la calculatrice peut contenir d'autres logiciels utiles pour les traitements de désherbage thermique, par exemple un programme permettant de calculer le délai de germination des plantes cultivées en fonction notamment de la température du sol, et de déterminer en conséquence la meilleure période pour le désherbage en pré-levée, immédiatement avant la sortie de terre, et/ou une base de données contenant une liste des mauvaises herbes susceptibles d'être rencontrées, avec les caractéristiques d'identification de chacune d'elles (aspect, nature du sol, etc.), facilitant pour l'utilisateur l'identification, par tri ou sélection selon ces caractéristiques, des herbes effectivement présentes.

Chaque feuille du bloc 243 comporte de préférence trois plages destinées à noter respectivement les données à entrer par l'utilisateur au cours des étapes ACQ, les données affichées par le programme lors des étapes MES et l'avis de l'utilisateur sur le résultat du traitement, cet avis pouvant l'aider à choisir plus facilement les données de la première plage, ou le conduire à adapter celles de la seconde plage, lors d'un traitement ultérieur. La première plage peut contenir un tableau à deux colonnes, la première colonne contenant la désignation des différents paramètres (largeur de travail, surface à traiter, température atmosphérique, etc.), et la seconde colonne des emplacements pour écrire la valeur de ces paramètres telle qu'introduite dans la calculatrice, le tableau précisant quels sont les paramètres qui sont pertinents seulement en pré-levée ou en post-levée. Dans ou sous le tableau peuvent être données des indications permettant d'évaluer la vitesse du vent, par exemple en observant le comportement des feuilles des arbres, ou des fumées. En ce qui concerne les herbes à détruire, la première plage peut contenir des emplacements pour noter les noms des différentes herbes présentes, avec un repère numérique correspondant à leur degré de résistance respectif, ainsi qu'une case pour reporter le degré de résistance le plus élevé de l'ensemble des herbes.

Une version plus élaborée du dispositif selon les figures 18 à 21, pouvant comporter, comme celui des figures 1 à 12, des brûleurs interchangeables de différents types et en nombre variable et dont la distance au sol est réglable, peut être fournie avec une calculatrice munie d'un programme simplifié par rapport à celui décrit précédemment.

Le dispositif selon l'invention peut être utilisé dans les cultures sous tunnels ou serres plastiques. L'appareil du type chariot, qui, bien qu'étant manoeuvré à la main, permet de traiter sans fatigue des surfaces relativement importantes, est particulièrement adaptés à cet usage. Les modèles sur tracteur, grâce à leur puissance de flamme optimisée, peuvent également être utilisés en toute sécurité dans ce type d'application.

Comme il ressort déjà de ce qui précède, les différentes caractéristiques de l'invention, qui ont été décrites dans des combinaisons particulières, peuvent être combinées entre elles différemment. L'invention englobe toutes les caractéristiques décrites, individuellement et dans toutes leurs combinaisons, pour autant que les combinaisons considérées, ou la dissociation de caractéristiques décrites en combinaison, soient techniquement réalisables.

L'invention propose également un procédé pour le classement d'une plante en ce qui concerne sa résistance au traitement par la chaleur, par exemple au moyen du dispositif décrit plus haut.

Dans une première étape du procédé, on choisit un degré de résistance parmi plusieurs prévus par un programme, par exemple le programme de la calculatrice du dispositif.

Dans une seconde étape, on détermine les paramètres de traitement du dispositif propres à détruire la plante visée en supposant que le degré choisi lui convient, par exemple en introduisant les données correspondantes dans le calculateur. On règle ensuite les paramètres de traitement du dispositif, par exemple en fonction des données de sortie de la calculatrice. Après avoir réalisé un traitement d'essai avec ces paramètres sur une longueur d'avance par exemple de l'ordre de cinq mètres, on effectue un test d'efficacité du traitement, notamment le test de pincement de la feuille entre les doigts. Si nécessaire, on répète les étapes précédentes avec des degrés de résistance croissants jusqu'à obtention d'un résultat satisfaisant. Le classement ainsi déterminé peut être utilisé pour régler le dispositif pour la suite du traitement, et peut être réutiliser pour des traitements ultérieurs portant sur le même type de plante.

## Revendications

1. Dispositif de traitement à la flamme d'un sol agricole, comprenant un châssis (1, 2) propre à être déplacé au-dessus du sol dans une direction de déplacement horizontale et une multiplicité de brûleurs (91) associés à des moyens d'alimentation en fluide combustible, alignés sur le châssis dans une direction horizontale d'étalement, caractérisé en ce que chaque brûleur fait partie d'une unité de production de flamme comportant un support de brûleur (64-70) propre à être fixé de façon amovible et en une position réglable continûment le long d'une barre (55, 61) s'étendant dans ladite direction d'étalement.

2. Dispositif selon la revendication 1, caractérisé en ce que la direction d'étalement est sensiblement perpendiculaire à ladite direction de déplacement.

3. Dispositif selon l'une des revendications 1 et 2, caractérisé en ce que chaque brûleur est propre à émettre une flamme dirigée selon un axe (97) et est monté sur son support avec possibilité d'orientation dudit axe autour d'un axe de pivotement (A) et perpendiculairement à celui-ci, les axes de pivotement de tous les brûleurs étant parallèles entre eux et perpendiculaires à ladite direction d'étalement.

4. Dispositif selon l'une des revendications précédentes, caractérisé en ce que ladite barre comprend un premier profilé (55) et au moins un second profilé (61), s'étendant côte à côte selon ladite direction d'étalement, le premier profilé et/ou au moins un support de brûleur étant fixé en permanence au châssis, en ce que chaque support de brûleur est propre à être monté et immobilisé indifféremment sur les premier et second profilés juxtaposés ou sur un seul d'entre eux en l'absence de l'autre, sans modification de sa position dans le plan de la section transversale des profilés, et en ce que l'ensemble des unités de production de flamme comprend un premier sous-ensemble d'au moins deux unités dont les supports sont montés sur les deux profilés et assurent la solidarisation de ceux-ci entre eux et au châssis, par l'intermédiaire du premier profilé, la position du second profilé au moins étant réglable dans la direction d'étalement.

5. Dispositif selon la revendication 4, caractérisé en ce que ledit ensemble comprend un second sous-ensemble d'au moins une unité dont le support est monté sur un seul profilé, dans une région de celui-ci s'étendant au-delà de la longueur de l'autre profilé.

6. Dispositif selon l'une des revendications 4 et 5, caractérisé en ce que chaque support de brûleur comprend deux mâchoires (64, 65) et des moyens de serrage (67, 70) propres à solliciter les deux mâchoires l'une vers l'autre en pinçant entre elles chacun des deux profilés, chaque mâchoire présentant des surfaces de coopération avec chaque profilé.

7. Dispositif selon la revendication 6, caractérisé en ce que les surfaces de coopération respectives des deux mâchoires, ainsi que les régions correspondantes de chaque profilé, sont sensiblement symétriques les unes des autres par rapport à un premier plan de symétrie (P1) parallèle à la direction d'étalement et en ce que les surfaces de coopération des mâchoires avec les deux profilés respectivement, ainsi que les régions correspondantes des profilé respectifs, sont symétriques les unes des autres par rapport à un second plan de symétrie (P2) parallèle à la direction d'étalement et perpendiculaire au premier plan de symétrie, les deux profilés étant disposés respectivement de part et d'autre du second plan de symétrie et étant décalés l'un par rapport à l'autre selon une direction contenue dans le premier plan de symétrie.

8. Dispositif selon l'une des revendications 6 et 7, caractérisé en ce que chaque profilé présente une aile (58, 63) faisant saillie en direction d'une mâchoire et que ladite mâchoire présente deux encoches pour recevoir les ailes respectives des deux profilés, l'aile d'un profilé coopérant avec l'encoche correspondante, en l'absence de l'autre profilé, pour bloquer la mâchoire, sous l'action des moyens de serrage, dans une position par rapport à l'autre mâchoire du même support pratiquement identique à la position prise lors du serrage sur les deux profilés.

9. Dispositif selon la revendication 8, rattachée à la revendication 7, caractérisé en ce que chaque profilé comprend une âme (56, 62) s'étendant selon le premier plan de symétrie (P1) et au moins une aile (58, 63) d'épaisseur à peu près uniforme s'étendant perpendiculairement à l'âme, symétriquement de part et d'autre dudit plan à partir du bord de l'âme tourné vers l'autre profilé.

10. Dispositif selon l'une des revendications 6 à 9, caractérisé en ce que les moyens de serrage comprennent une tige de serrage (67), par exemple filetée, le long de laquelle les deux mâchoires peuvent coulisser l'une vers l'autre, les ailes (58, 63) des profilés étant avantageusement pratiquement en contact avec ladite tige.

11. Dispositif selon la revendication 10, rattachée à la revendication 7, caractérisé en ce que l'axe (A) de la tige de serrage s'étend dans le second plan de symétrie (P2) perpendiculairement au premier plan de symétrie (P1).

12. Dispositif selon l'une des revendications 6 à 11, caractérisé en ce que chaque brûleur est fixé de façon amovible sur son support.

13. Dispositif selon la revendication 12, caractérisé en ce qu'il comprend un jeu de brûleurs de différentes puissances propres à être montés au choix et en nombre variable sur des supports.

14. Dispositif selon l'une des revendications 12 et 13, caractérisé en ce que chaque brûleur est solidaire d'une tige de brûleur (90) qui est fixée sur le support par pincement entre deux brides (81, 82) à l'aide des moyens de serrage, la tige de serrage traversant successivement les deux mâchoires et les deux brides.

15. Dispositif selon la revendication 14, caractérisé en ce que les deux brides présentent des lèvres respectives (84) inclinées l'une vers l'autre et venant en contact avec la tige de brûleur, au-delà de l'axe (97) de celle-ci par rapport à la tige de serrage, de façon à solliciter la tige de brûleur en direction de la tige de serrage, contre une butée constituée par un galet (80) entourant la tige de serrage et présentant une gorge annulaire (85) ouverte radialement vers l'extérieur pour recevoir la tige de brûleur.

16. Dispositif selon l'une des revendications 14 et 15, rattachée à la revendication 2, caractérisé en ce que l'axe de la tige de brûleur constitue l'axe de la flamme (97) et que les brides peuvent être placées par rapport aux mâchoires dans une position angulaire réglable autour de l'axe de la tige de serrage, qui constitue ledit axe de pivotement (A).

17. Dispositif selon la revendication 16, caractérisé en ce que les mâchoires et les brides présentent des moyens d'indexation mutuelle permettant d'orienter chaque brûleur dans des directions prédéfinies.

18. Dispositif selon la revendication 17, caractérisé en ce que les moyens d'indexation mutuelle comprennent au moins une saillie prévue sur une mâchoire et une multiplicité d'évidements ménagés dans au moins une bride de chaque support de brûleur, ladite mâchoire pouvant être montée sur la barre, par rotation d'un demi-tour autour de l'axe de pivotement, soit dans une position où la saillie peut coopérer avec les évidements, soit dans une position où la saillie reste hors de contact avec la bride pour réaliser un réglage d'orientation continu.

19. Dispositif selon l'une des revendications précédentes, caractérisé en ce que les moyens d'alimentation comprennent un bloc de distribution propre à être relié à une réserve de fluide (40, 41), un bloc d'arrivée de fluide (105) associé à chaque brûleur et présentant une entrée de fluide (106), une sortie de fluide vers ledit brûleur et une sortie de fluide (107) vers l'extérieur, au moins une conduite flexible d'arrivée de fluide (108) reliant le bloc de distribution à l'entrée d'un bloc d'arrivée et une série de conduites flexibles de transmission de fluide (109) reliant chacune la sortie extérieure et l'entrée de deux blocs d'arrivée voisins respectivement de façon que chaque brûleur soit relié à une conduite d'arrivée par l'intermédiaire de son propre bloc d'arrivée et le cas échéant d'autres blocs d'arrivée et de conduites de transmission correspondantes.

20. Dispositif selon l'une des revendications précédentes, caractérisé en ce que les moyens d'alimentation comprennent un détendeur (137, 138) de gaz combustible comportant plusieurs positions de travail correspondant à des pressions préréglées et pour lesquelles un même brûleur fonctionne à des puissances thermiques différentes.

21. Dispositif selon l'une des revendications précédentes, caractérisé en ce que le châssis définit un logement pour au moins un réservoir cylindrique (40, 41) de propane liquéfié sous pression disposé debout avec l'ouverture de sortie vers le haut, et comporte des moyens (23, 24) pour sa fixation sur un tracteur agricole (3), notamment à l'arrière de celui-ci.

22. Dispositif selon la revendication 21, caractérisé en ce qu'il comprend des moyens de télécommande (157, 158) permettant l'interruption immédiate de l'arrivée de fluide aux brûleurs à partir du poste de conduite du tracteur.

23. Dispositif selon l'une des revendications 21 et 22, caractérisé en ce que le châssis comprend une partie avant fixe (1) portée à distance du sol, supportant des réservoirs de gaz combustible et le cas échéant ledit bloc de distribution et/ou ledit détendeur, et une partie arrière mobile (2) articulée sur la partie fixe autour d'un axe (53) parallèle à ladite direction d'étalement, portant ladite barre et les unités de production de flamme, la partie arrière pouvant prendre une position de travail abaissée dans laquelle les brûleurs sont proches du sol et une position de repos relevée.

24. Dispositif selon la revendication 23, caractérisé en ce que la partie arrière est actionnée par un vérin hydraulique (205, 209) porté par le châssis et propre à être relié au circuit hydraulique du tracteur.

25. Dispositif selon la revendication 24, caractérisé en ce que les moyens d'alimentation comprennent des moyens de commande (167, 168) couplés audit vérin hydraulique de façon à mettre les brûleurs en veilleuse lorsque la partie arrière est relevée.

26. Dispositif selon l'une des revendication 21 à 25, caractérisé en ce que le châssis définit des logements pouvant recevoir chacun, au choix, des réservoirs cylindriques d'un même diamètre et de deux hauteurs différentes, par exemple des réservoirs de propane de 13 kg (40) et de 35 kg (41), et présente des éléments de retenue supérieurs (43) propres à coopérer seulement avec les réservoirs de plus grande hauteur et des éléments de retenue inférieurs (42) propres à coopérer avec les réservoirs des deux types.

27. Dispositif selon l'une des revendications 21 à 26, caractérisé en ce que le châssis comprend au moins deux montants (14, 15, 16) décalés l'un par rapport à l'autre dans la direction de déplacement, deux montants voisins délimitant entre eux un logement pour une rangée de réservoirs de gaz combustible alignés latéralement, chaque montant s'étendant latéralement sur une distance correspondant à peu près à la longueur d'une rangée.

28. Dispositif selon la revendication 27, caractérisé en ce qu'au moins le montant d'extrémité avant (14) comprend deux jambages inférieurs (20) s'écartant l'un de l'autre latéralement et vers le bas à partir d'une zone de jonction (21), et deux jambages supérieurs (22) s'écartant l'un de l'autre latéralement et vers le haut à partir de ladite zone de jonction, ladite zone de jonction et les extrémités inférieures des deux jambages du montant d'extrémité avant (14) étant munis d'éléments de prise (23, 24) permettant la fixation en trois points du châssis sur le tracteur, chaque montant étant formé par assemblage de deux pièces sensiblement identiques (17, 18) constituant chacune les jambages inférieur et supérieur situés d'un même côté, et un élément de retenue inférieur (42) et un élément de retenue supérieur (43) pour une même rangée de réservoirs étant montés respectivement sur les jambages inférieurs (20) et sur les jambages supérieurs (22) d'un même montant, deux montants au moins, et/ou deux éléments de retenue au moins, étant de préférence sensiblement identiques entre eux.

29. Dispositif selon la revendication 28, caractérisé en ce que le châssis comprend un élément de structure allongé médian (29) s'étendant obliquement vers le bas et vers l'arrière à partir de la zone de jonction (21) du montant d'extrémité avant (14) et deux éléments de structure allongés inférieurs (12, 13) se rapprochant l'un de l'autre vers l'arrière, respectivement à partir des extrémités inférieures des deux jambages inférieurs de ce même montant, les extrémités arrière de ces trois éléments allongés étant réunies entre elles en une zone de jonction arrière (33), chaque rangée de réservoirs étant composée de deux sous-ensembles pouvant être introduits latéralement et disposés respectivement de part et d'autre de l'élément allongé médian, la course d'introduction d'un premier réservoir de chaque sous-ensemble étant limitée par cet élément, et à chaque rangée de réservoirs étant associé au moins un élément de retenue (42, 43) monté pivotant autour d'un axe horizontal s'étendant dans la direction d'alignement de la rangée et présentant deux bras (46, 47), et le cas échéant des intercalaires (48), s'étendant sensiblement radialement par rapport à cet axe, les bras faisant saillie aux deux extrémités de la rangée respectivement, et chaque intercalaires s'insérant entre deux réservoirs adjacents d'un même sous-ensemble, dans une position de retenue, et les bras et les intercalaires s'effaçant pour laisser passer les réservoirs dans une position de chargement/déchargement.

30. Dispositif selon l'une des revendications 27 à 29, caractérisé en ce qu'il comprend un bloc de distribution de gaz comportant des éléments collecteurs (111-113) associés chacun à une rangée de réservoirs et présentant chacun deux faces frontales opposées mutuellement parallèles et une cavité interne (128, 130) débouchant dans les deux faces frontales et communiquant avec des orifices d'entrée latéraux qui peuvent être reliés chacun à l'un des réservoirs de la rangée, et des moyens d'assemblage (118, 125, 127) de ces éléments sous forme d'un empilement dans lequel ils sont en contact mutuel par leurs faces frontales, les cavités des différents éléments collecteurs étant raccordés entre elles de façon étanche, à travers les faces frontales en contact mutuel, pour former une conduite collectrice (121) communiquant avec l'ensemble des orifices d'entrée et débouchant en aval par l'une des faces frontales à une extrémité de l'empilement.

31. Dispositif selon l'une des revendications précédentes, caractérisé en ce que les moyens d'alimentation comprennent un robinet de sécurité permettant l'interruption immédiate de l'arrivée de fluide aux brûleurs et pouvant être repéré facilement et actionné manuellement aussi bien depuis les côtés latéraux que depuis l'arrière du dispositif.

32. Dispositif selon l'une des revendications précédentes, caractérisé en ce que les moyens d'alimentation comprennent un robinet de sécurité muni d'un poussoir d'actionnement manuel direct (154) et d'un câble d'actionnement à distance (157) relié au poste de conduite du tracteur, le poussoir et le câble agissant coaxialement sur une même pièce (144) qui coulisse dans un corps (110) pour la fermeture du robinet.

33. Dispositif selon la revendication 32, caractérisé en ce que le poussoir fait saillie vers le haut et que le câble part vers le bas, à partir du corps.

34. Dispositif selon l'une des revendications 32 et 33, caractérisé en ce que les moyens d'alimentation comprennent un robinet de réglage de veilleuse (173, 174) muni d'un organe de manoeuvre rotatif (173) disposé à côté du poussoir (154) et dont l'axe de rotation est parallèle à l'axe du poussoir.

35. Dispositif selon l'une des revendications précédentes, caractérisé en ce qu'il comprend un bloc de distribution de gaz rassemblant sous une forme compacte et rigide toute les fonctions de commande d'alimentation des brûleurs en gaz combustible, relié par des conduites en amont aux réservoirs et en aval aux brûleurs.

36. Dispositif selon l'une des revendications 19, 30 et 35, caractérisé en ce que le bloc de distribution comprend un corps (110) en une seule pièce traversé par le gaz alimentant les brûleurs et définissant pour celui-ci un trajet sur lequel sont interposés des moyens pour la réalisation d'une ou plusieurs des fonctions suivantes: interruption de l'alimentation, mise en veilleuse, réglage de veilleuse, ledit empilement d'éléments collecteurs (111-113) pouvant être monté en amont et ledit détendeur (137, 138) en aval sur le corps.

37. Dispositif selon l'une des revendications 21 à 36, rattachée à la revendication 4, caractérisé en ce qu'il comprend deux accessoires d'extension arrière destinés à être fixés respectivement à gauche et à droite du châssis, chaque accessoire d'extension arrière comportant un profilé de liaison (221) de même section que le premier profilé (55) et pouvant être fixé dans l'alignement de celui-ci, par l'intermédiaire du second profilé (61), grâce à un support de liaison analogue aux supports des brûleurs, une barre de liaison (220) s'étendant vers l'arrière à partir du profilé de liaison et portant au moins un profilé additionnel (222, 223) parallèle au profilé de liaison et dont la section transversale se déduit de celle de ce dernier par une translation vers l'arrière, le profilé de liaison et le ou les profilés additionnels ayant une longueur petite par rapport à celle des premier et second profilés et pouvant recevoir des unités de production de flamme respectives mutuellement alignées pour le traitement du sol le long d'une ligne s'étendant dans la direction de déplacement sur l'un des côtés du châssis, au moins un profilé complémentaire pouvant en outre s'étendre latéralement de l'un à l'autre des accessoires d'extension arrière en étant fixé à des profilés additionnels respectifs de ceux-ci par des supports, le profilé complémentaire pouvant recevoir des unités de production de flamme et/ou des outils pour le traitement mécanique du sol.

38. Dispositif selon l'une des revendications 21 à 37, caractérisé en ce qu'il comprend au moins un accessoire d'extension latérale comportant un profilé d'extension (260), notamment d'une longueur de plusieurs mètres, propre à être fixé à une extrémité sur un côté (8) du châssis de façon à s'étendre vers l'extérieur selon la direction d'étalement, et muni à son extrémité opposée d'une roue (269) propre à rouler sur le sol, le profilé d'extension pouvant recevoir des unités de production de flamme et étant articulé sur le châssis de façon à pivoter de haut en bas pour suivre les inégalités du sol et/ou pour être replié vers le haut en limitant l'encombrement en largeur du dispositif en dehors de ses périodes d'utilisation.

39. Dispositif selon l'une des revendications 21 à 38, caractérisé en ce qu'il comprend une calculatrice électronique (242) programmée de façon à indiquer à l'utilisateur, en fonction de données d'entrée constituées par les caractéristiques d'un traitement à effectuer et des conditions extérieures, des données de sortie constituées par des valeurs de réglage permettant de réaliser ce traitement de façon optimale, notamment en évitant des débits excessifs de gaz conduisant à une chute de pression dans les réservoirs, ainsi que la durée de traitement correspondante.

40. Dispositif selon la revendication 39, caractérisé en ce que le programme prend en compte l'une au moins des données suivantes:
- pour les caractéristiques du traitement: superficie du sol à traiter, largeur de la bande - ou largeur de chaque bande élémentaire et de l'intervalle entre bandes et nombre de bandes élémentaires - à traiter à chaque passage, nombre de brûleurs utilisés, nature et degré de développement des herbes à détruire, ;
- pour les conditions extérieures: nombre et contenance des réservoirs de gaz disponibles, température atmosphérique, vitesse du vent, niveau de précipitation;
- pour les valeurs de réglage: nombre et type de brûleurs, position de travail du détendeur, distance des brûleurs au sol et leur inclinaison, vitesse de déplacement du tracteur, durée du traitement, quantité de gaz consommée.

41. Dispositif selon l'une des revendications 39 et 40, caractérisé en ce que la calculatrice programmée affiche sur un écran des messages successifs demandant à l'utilisateur d'introduire les données d'entrée au moyen d'un clavier, puis affiche les données de sortie.

42. Dispositif selon la revendication 41, caractérisé en ce que, lorsqu'il n'est pas possible de satisfaire les conditions définies par les données d'entrée, ou que la durée de traitement calculée ne convient pas à l'utilisateur, le programme offre à celui-ci la possibilité de déclencher l'affichage d'une nouvelle série de messages demandant chacun la confirmation ou le remplacement de l'une des données d'entrée, puis l'affichage de données de sortie tenant compte des données d'entrée ainsi modifiées.

43. Dispositif selon l'une des revendications 39 à 42, caractérisé en ce qu'il comprend des moyens de mémorisation (243) pour conserver sous forme écrite les données d'entrée et de sortie relatives à un traitement, ainsi que le cas échéant les remarques de l'utilisateur sur celui-ci.

44. Dispositif selon la revendication 43, caractérisé en ce que les moyens de mémorisation comprennent un bloc de formulaires préimprimés (243) comportant des emplacements pour y écrire les données.

45. Dispositif selon l'une des revendications 39 à 44, caractérisé en ce que la calculatrice (242) et le cas échéant les moyens de mémorisation (243) sont logés dans un coffret (230, 231) monté sur le châssis et contenant un jeu de brûleurs dans lequel peuvent être choisis les brûleurs à utiliser pour chaque traitement.

46. Dispositif selon l'une des revendications 1 à 20, caractérisé en ce que le châssis définit un logement pour au moins un réservoir de fluide combustible et est muni d'au moins un essieu et d'une poignée arrière transversale, formant ainsi un chariot propre à être poussé à la main.

47. Procédé pour le classement d'une plante en ce qui concerne sa résistance au traitement par la chaleur au moyen du dispositif selon la revendication 40, dans lequel
a) on choisit un degré de résistance parmi ceux prévus par le programme;
b) on introduit les données dans le calculateur en supposant que le degré choisi correspond à la plante à traiter;
c) on règle les paramètres de traitement du dispositif en fonction des données de sortie de la calculatrice;
d) on réalise un traitement d'essai avec ces paramètres sur une longueur d'avance de quelques mètres;
e) on effectue un test d'efficacité du traitement; et
f) si nécessaire, on répète les étapes a) à e) avec des degrés de résistance croissants jusqu'à obtention d'un résultat satisfaisant.
